# EUROPEAN PATENT APPLICATION

(11) **EP 2 955 920 A1**
(43) Date of publication of application: **16.12.2015**
(21) Application number: 15171546.3
(22) Date of filing: 11.06.2015
(51) Int. Cl.: H04N 19/176, H04N 19/70, H04N 19/593, H04N 19/463, H04N 19/186, H04N 19/93

(54) **METHOD AND SYSTEM FOR ENCODING AND DECODING, ENCODER AND DECODER**

(30) Priority: 13.06.2014 US 201462011584 P; 03.09.2014 US 201462045513 P; 13.05.2015 TW 104115225
(71) Applicant: Industrial Technology Research Institute, Chutung Hsinchu 31040 (TW)
(72) Inventor: Chang, Yao-Jen, 300 Hsinchu City (TW); Lin, Chun-Lung, 643 Yunlin County (TW); Hung, Chao-Hsiung, 330 Taoyuan City (TW); Lin, Ching-Chieh, 105 Taipei City (TW); Tu, Jih-Sheng, 260 Yilan City (TW)
(74) Representative: Becker Kurig Straus

(57) **Abstract**

An encoding method and a decoding method, and a codec system, an encoder and a decoder using the methods are provided. The encoding method includes receiving a first coding unit of a frame, and selecting a first index pixel and a second index pixel from pixels of the frame and setting index values corresponding to the two index pixels, where a color of the first index pixel is different to a color of the second index pixel. The encoding method includes indexing each pixel in the first coding unit to generate an index map. The encoding method includes generating a coding value corresponding to the first coding unit according to the index map, and transmitting the coding value to a decoder, wherein only an index value corresponding to a 1^{st} scanned pixel in the pixels of the first coding unit in the index map is recorded in the coding value.

## Description

### BACKGROUND OF THE DISCLOSURE

### Field of the Disclosure

The disclosure relates to an encoding method and a decoding method for encoding and decoding a coding unit, and a codec system, an encoder and a decoder using the methods.

### Description of Related Art

Along with development of technology, resolution, specification and size of video display become higher, and people's demands on quality and size of video image are accordingly increased. In order to satisfy such demand, the video coding experts group (VCEG) of the ITU telecommunication standardization sector (ITU-T) and the moving picture experts group (MPEG) of the International Organization for Standardization (ISO)/international electrotechnical commission (IEC) co-found the joint collaborative team on video coding (JCT-VC), and start an H.265/high efficiency video coding (HEVC) project in order to provide coding efficiency higher than that of an H.264/advanced video coding (AVC) video compression standard (which may save a bit rate of about 50% under a same subjective quality), especially for videos with a high definition (HD), an ultra high definition (Ultra HD), etc.

Application environment of the large size and high definition video is mainly on natural video images, and customization thereof was completed in 2013. The current development lies in application range extension of the H.265/HEVC, which includes establishing a screen content coding (SCC) standard required by a screen sharing application service. The video content shared by the screens generally includes mixed video content materials, for example, a frame may simultaneously include a nature image, a large amount of text and pictures, a mouse indicator and various lines, etc., and since such screen application environment is not complied with the original designed objective of the H.265/HEVC, the JCT-VC has transferred its focus to develop new high-performance screen coding standard techniques recently. The SCC standard is still developed based on existing tools of the H.265/HEVC, for example, a single color mode and a palette mode, etc., are coding techniques belonging to the SCC standard.

The single color mode is to search adjacent pixels of a coding unit (CU) block, and find a color from the adjacent pixels to represent all of the pixels in the CU block. Thereafter, an encoding end transmits indexes corresponding to the adjacent pixels of such pixel to a decoding end. A technical concept of the palette mode is to search one or more colors to represent a frame within the currently encoded CU block, and index each of the pixels in the CU block by using indexes corresponding to the above colors. The coding end establishes an index map by using the indexes corresponding to the colors, and transmits one or more representative colors and the index corresponding to the color of each pixel in the index map to the decoding end. Therefore, in the aforementioned palette mode, if a plurality of colors are used to represent the frame of the currently encoded CU block, a plurality of representative colors and the index corresponding to the color of each pixel are required to be transmitted, which causes reduction of the coding performance. Therefore, it is important to enhance the coding performance to decrease unnecessary transmission and calculation in the coding computation.

### SUMMARY OF THE DISCLOSURE

The disclosure is directed to an encoding method and a decoding method, and a codec system, an encoder and a decoder using the methods, which effectively improve coding performance of a screen video coding technique.

An exemplary embodiment of the disclosure provides an encoding method, which includes following steps. A first coding unit of a frame is received, where the first coding unit includes a plurality of pixels arranged in an L×L array, and L is a positive integer. Two pixels are selected from the pixels of the frame to serve as a first index pixel and a second index pixel, where a color of the first index pixel is different to a color of the second index pixel. Each of the pixels in the first coding unit is indexed to generate an index map, where a color of each pixel of the first coding unit in the index map is presented by an index value corresponding to the first index pixel or an index pixel corresponding to the second index pixel. A coding value corresponding to the first coding unit is generated according to the index map, and the coding value is transmitted to a decoding end, where only an index value corresponding to a 1^{st} scanned pixel of the first coding unit in the index map is recorded in the coding value.

An exemplary embodiment of the disclosure provides a decoding method, which includes following steps. A coding value corresponding to a first coding unit is received, where the first coding unit includes a plurality of pixels arranged in an L×L array, and L is a positive integer. An index map corresponding to the first coding unit is reconstructed according to an index value, at least one code mode and at least one value corresponding to at least one running character in the coding value, where the received coding value is only used for decoding an index value of a 1^{st} scanned indexin the index map of the first coding unit. Colors of a first index pixel and a second index pixel are obtained, and the pixels of the first coding unit are reconstructed according to the color of the first index pixel, the color of the second index pixel and a plurality of index values of the index map, where the color of the first index pixel is different to the color of the second index pixel.

An exemplary embodiment of the disclosure provides an encoder including a coding module, a color selecting module, an index setting module and an index map establishing module. The coding module receives a first coding unit of a frame, where the first coding unit includes a plurality of pixels arranged in an L×L array, and L is a positive integer. The color selecting module selects two pixels from the pixels of the first coding unit to serve as a first index pixel and a second index pixel, where a color of the first index pixel is different to a color of the second index pixel. The index map establishing module indexes each of the pixels in the first coding unit to generate an index map, where a color of each pixel of the first coding unit in the index map is presented by an index value corresponding to the first index pixel or an index value corresponding to the second index pixel. Moreover, only an index value corresponding to a 1^{st} scanned pixel of the first coding unit in the index map is recorded in a coding value. Then, the coding module transmits the coding value to a decoder.

An exemplary embodiment of the disclosure provides a decoder including a coding value receiving module and a decoding module. The coding value receiving module receives a coding value corresponding to a first coding unit, where the first coding unit includes a plurality of pixels arranged in an L×L array, and L is a positive integer. The decoding module reconstructs an index map corresponding to the first coding unit according to an index value, at least one code mode and at least one value corresponding to at least one running character in the coding value, where the received coding value is only used for decoding an index value of a 1^{st} scanned index in the index map of the first coding unit. Moreover, the decoding module obtains colors of a first index pixel and a second index pixel, and reconstructs a plurality of pixels of the first coding unit according to the color of the first index pixel, the color of the second index pixel and a plurality of index values of the index map, where the color of the first index pixel is different to the color of the second index pixel.

An exemplary embodiment of the disclosure provides a codec system including an encoder and a decoder. The encoder receives a first coding unit of a frame, where the first coding unit includes a plurality of pixels arranged in an L×L array, and L is a positive integer. The encoder selects two pixels from the pixels of the frame to serve as a first index pixel and a second index pixel, where a color of the first index pixel is different to a color of the second index pixel. The encoder indexes each of the pixels in the first coding unit to generate an index map, where a color of each pixel of the first coding unit in the index map is presented by an index value corresponding to the first index pixel or an index value corresponding to the second index pixel. Only an index value corresponding to a 1^{st} scanned pixel of the first coding unit in the index map is recorded in a coding value. Moreover, the encoder transmits the coding value to the decoder.

According to the above descriptions, in the encoding method, the decoding method and the codec system, the encoder and the decoder using the methods of the disclosure, only the index value corresponding to the 1^{st} scanned pixel in the pixels of the coding unit is transmitted, such that a data transmission amount during the coding computation is effectively decreased, so as to greatly decrease a time required by the coding computation to enhance the coding performance.

In order to make the aforementioned and other features and advantages of the disclosure comprehensible, several exemplary embodiments accompanied with figures are described in detail below.

### BRIEF DESCRIPTION OF THE DRAWINGS

The accompanying drawings are included to provide a further understanding of the disclosure, and are incorporated in and constitute a part of this specification. The drawings illustrate embodiments of the disclosure and, together with the description, serve to explain the principles of the disclosure.
FIG. 1A is a diagram of an encoder according to a first exemplary embodiment of the disclosure.
FIG. 1B is a diagram of a decoder according to the first exemplary embodiment of the disclosure.
FIG. 1C is a diagram of a codec chip according to the first exemplary embodiment of the disclosure.
FIG. 2A and FIG. 2B are schematic diagrams of an image coding operation according to the first exemplary embodiment of the disclosure.
FIG. 3 is an example of a pixel pair table according to the first exemplary embodiment of the disclosure.
FIG. 4 is an example of setting index values according to the first exemplary embodiment of the disclosure.
FIG. 5 is an example of establishing an index map according to the first exemplary embodiment of the disclosure.
FIG. 6A and FIG. 6B illustrate an example of generating a coding value according to the first exemplary embodiment of the disclosure.
FIG. 7 is a flowchart illustrating an encoding method according to the first exemplary embodiment of the disclosure.
FIG. 8A and FIG. 8B are diagrams illustrating program codes used for coding/decoding according to the first exemplary embodiment of the disclosure.
FIG. 9A is a diagram illustrating program codes used for scanning a coding unit in a copy left mode according to the first exemplary embodiment of the disclosure.
FIG. 9B is a diagram illustrating program codes used for scanning a coding unit in a copy above mode according to the first exemplary embodiment of the disclosure.
FIG. 10A-FIG. 10G are diagrams illustrating an example of reconstructing an index map according to a coding value according to the first exemplary embodiment of the disclosure.
FIG. 11 is a flowchart illustrating a decoding method according to the first exemplary embodiment of the disclosure.
FIG. 12 is a schematic diagram of an image coding operation according to a second exemplary embodiment of the disclosure.
FIG. 13A and FIG. 13B are schematic diagrams of a pixel clustering operation according to the second exemplary embodiment of the disclosure.
FIG. 14 is a schematic diagram of an image coding operation according to a third exemplary embodiment of the disclosure.
FIG. 15A and FIG. 15B are schematic diagrams of a pixel clustering operation according to the third exemplary embodiment of the disclosure.

### DESCRIPTION OF EMBODIMENTS

### [First exemplary embodiment]

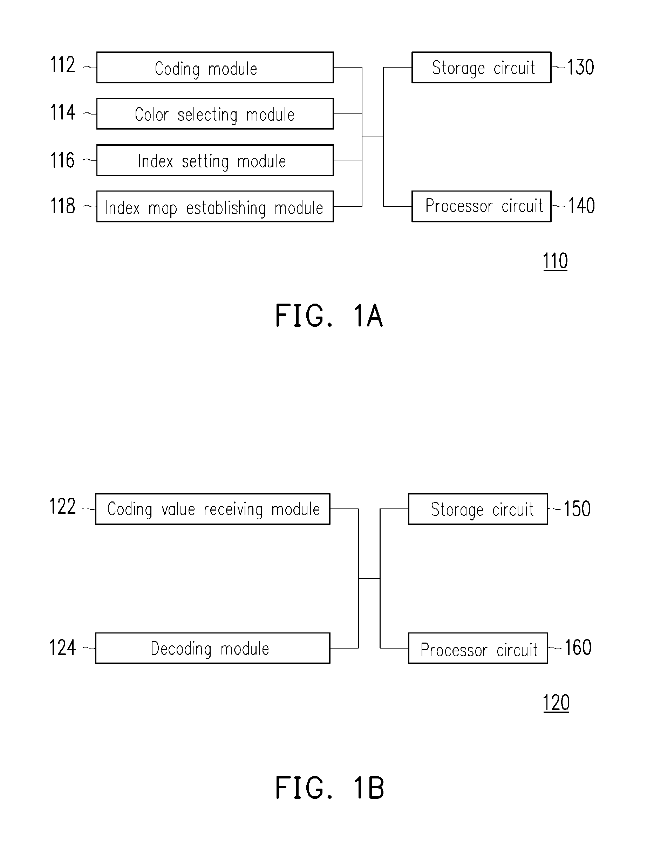

FIG. 1A is a diagram of an encoder according to the first exemplary embodiment of the disclosure.

Referring to FIG. 1A, the encoder 110 includes a coding module 112, a color selecting module 114, an index setting module 116, an index map establishing module 118, a storage circuit 130 and a processor circuit 140.

In the present exemplary embodiment, the storage circuit 130 is used for storing various data, program codes or processed images. For example, the storage circuit 130 can be storage medium such as a memory or a hard disk drive (HDD), though the disclosure is not limited thereto. The processor circuit 140 is used for controlling a whole operation of the encoder 110. For example, the processor circuit 140 can be a central processing unit (CPU), a micro-processor or an embedded controller, which is not limited by the disclosure. The processor circuit 140 is coupled to the storage circuit 130, and is used for controlling the encoding module 112, the color selecting module 114, the index setting module 116 and the index map establishing module 118 to perform a coding operation.

The coding module 112 receives a coding unit (which is referred to as a first coding unit) in a frame, where the first coding unit includes a plurality of pixels arranged in an L×L array, and L is a positive integer. To be specific, under an H.265/HEVC standard, a coding tree unit (CTU) is taken as a maximum processing block when the coding unit is encoded, and a size of the CTU is generally set to a 64×64 block. The coding unit can be smaller than or equal to the block size of the CTU. For example, the coding unit is a square rectangle and the size thereof can be a 64×64 block, a 32×32 block, a 16×16 block and an 8×8 block. It should be noticed that the unit of the size of the coding unit and an adjacent area thereof in the present exemplary embodiment is pixel. In the present exemplary embodiment, for simplicity's sake, the size of the first coding unit is assumed to be a 4×4 block.

The color selecting module 114 selects two pixels with different colors from the pixels in the received first coding unit to serve as a first index pixel and a second index pixel. In an embodiment, the coding module 112 selects two pixels from a plurality of pixels within the adjacent area of the first coding unit 200 to serve as the first index pixel and the second index pixel. The encoder 110 further includes a pixel pair table establishing module (not shown), and the pixel pair table establishing module establishes a pixel pair table to record identification values and pixel pairs corresponding to the aforementioned pixels, where implementation of recording the identification values and the pixel pairs by the pixel pair table establishing module is described later. However, the disclosure is not limited thereto, for example, in another exemplary embodiment, the coding module 112 can select two pixels from all of the pixels of the frame to serve as the first index pixel and the second index pixel. The current video image applications all apply colors to implement display, and each pixel in the frame is composed of three coding elements, for example, each pixel is encoded by using a YUV color coding method, or is presented in a RGB color model, where the YUV color coding method is used for compiling a color space, in which "Y" represents luminance (luma), "U" and "V" represent chrominance (chroma) and concentration. The RGB color model is a color adding model, which is used for adding color lights of three primary colors of red, green and blue according to different proportions to generate diversified color lights. For example, the YUV color coding method focuses on visual sensitivity for brightness, and the RGB color model focuses on color perception by human eyes. It should be noticed that in the present exemplary embodiment of the disclosure, the two pixels with different colors are substantially composed of the aforementioned three coding elements, respectively.

The index setting module 116 is used for setting an index value corresponding to the first index pixel and an index value corresponding to the second index pixel.

The index map establishing module 118 indexes each of the pixels in the first coding unit to generate an index map corresponding to the first coding unit by using a two-color mode/bi-color mode. However, the disclosure is not limited thereto, for example, in another exemplary embodiment, the index map establishing module 118 indexes each of the pixels in the first coding unit to generate the index map corresponding to the first coding unit by using a palette mode. Particularly, a color of each pixel of the first coding unit in the generated index map is presented by the index value corresponding to the first index pixel or the index value corresponding to the second index pixel.

In the present exemplary embodiment, the coding module 112 generates a coding value corresponding to the first coding unit according to the index map generated by the index map establishing module 118.

After the above coding is completed, the encoder 110 can transmit the encoded data to a decoder for decoding. For example, the encoder 110 is implemented in a video transmitter terminal, and the decoder is implemented in a video receiving terminal, where the encoder and the decoder can communicate with each other through a wired or wireless manner.

FIG. 1B is a diagram of a decoder according to the first exemplary embodiment of the disclosure.

Referring to FIG. 1B, the decoder 120 includes a coding value receiving module 122, a decoding module 124, a storage circuit 150 and a processor circuit 160. The storage circuit 150 is used for storing various data, program codes or images to be processed or processed images. For example, the storage circuit 150 can be a storage medium such as a memory or a hard disc, etc., though the disclosure is not limited thereto. The processor circuit 160 is coupled to the storage circuit 150 and is used for controlling a whole operation of the decoder 120. Particularly, the processor circuit 160 controls the coding value receiving module 122 and the decoding module 124 to implement a decoding operation. For example, the processor circuit 160 can be a central processor (CPU), a micro-processor or an embedded controller, which is not limited by the disclosure.

Compared to the encoder 110, the coding value receiving module 122 of the decoder 120 receives the coding value from the coding module 112 of the encoder 110, and the decoding module 124 restores the corresponding coding unit according to the received coding value. For example, the coding value receiving module 122 receives an identification value corresponding to the color of each of the pixel pair or the color of the first index pixel and the color of the second index pixel, and receives the coding value corresponding to the aforementioned first coding unit, and the decoding module 124 reconstructs the index map corresponding to the first coding unit according to the coding value, and reconstructs a plurality of the pixels of the first coding unit according to the color of the first index pixel, the color of the second index pixel and a plurality of indexes of the index map.

It should be noticed that the aforementioned encoder and decoder are respectively implemented in different terminals, and transmit required data to each other through a network. However, the disclosure is not limited thereto, and in another exemplary embodiment, the encoder and decoder can be implemented in a same chip or system. For example, in an example that the encoder and the decoder are respectively implemented in different terminals, the encoder and the decoder are two individual devices, and the encoder transmits compressed data to the decoder, and the decoder receives the compressed data transmitted by the encoder. In an example that the encoder and the decoder are implemented in a same chip or system, the encoder and the decoder are configured in a same device, in this case, the encoder transmits the compressed data to an HDD (for example, the storage circuit 102) of the device, and the decoder receives the compressed data from the HDD of the same device.

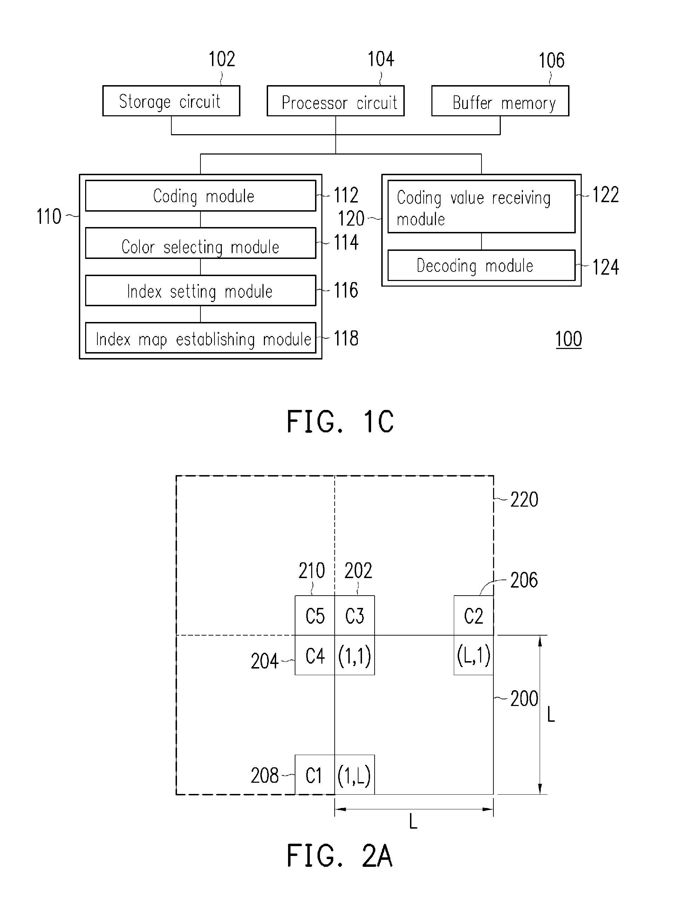

FIG. 1C is a diagram of a codec chip according to the first exemplary embodiment of the disclosure.

Referring to FIG. 1C, the codec chip 100 (which is also referred to as a codec system) includes a storage circuit 102, a processor circuit 104, a buffer memory 106, an encoder 110 and a decoder 120.

The storage circuit 102 is used for storing various data, program codes or image to be processed and processed images. For example, the storage circuit 102 can be a storage medium such as a memory or an HDD, though the disclosure is not limited thereto.

The processor circuit 104 is used for controlling a whole operation of the codec chip 100. For example, the processor circuit 104 can send instructions to the storage circuit 102 to execute the encoder 110 and the decoder 120, so as to perform encoding and decoding operations to images. For example, the processor circuit 104 can be a CPU, a micro-processor or an embedded controller, which is not limited by the disclosure.

The buffer memory 106 is coupled to the processor circuit 104, and is used for temporarily storing data. In the present exemplary embodiment, the buffer memory 106 is a static random-access memory (SRAM). It should be noticed that the disclosure is not limited thereto, and in another exemplary embodiment, the buffer memory 106 can be a dynamic random access memory or other memories.

The storage circuit 102 is coupled to the processor circuit 104 and the buffer memory 106. Operations of the encoder 110 and the decoder 120 are respectively the same to that of the encoder and the decoder shown in FIG. 1A and FIG. 1B. For example, the encoder 110 includes the coding module 112, the color selecting module 114, the index setting module 116 and the index map establishing module 118. The decoder 120 includes the coding value receiving module 122 and the decoding module 124.

It should be noticed that the encoder and the decoder of the disclosure are implemented by software modules or program codes, for example, the storage circuit 102 stores the aforementioned coding module, the color selecting module, the index setting module, the index map establishing module, the pixel pair table establishing module, the coding value receiving module and the decoding module, and when the codec chip 100 is enabled, the software program codes are loaded to the buffer memory 106 from the storage circuit 102, and the processor circuit 104 executes the same to implement functions of the coding module, the color selecting module, the index setting module, the index map establishing module, the pixel pair table establishing module, the coding value receiving module and the decoding module. However, the disclosure is not limited thereto, for example, in another exemplary embodiment of the disclosure, the codec chip, the encoder and the decoder can be implemented by hardware circuits. For example, the aforementioned coding module, the color selecting module, the index setting module, the index map establishing module, the pixel pair table establishing module, the coding value receiving module and the decoding module can be implemented as a coding circuit, a color selecting circuit, an index setting circuit, an index map establishing circuit, a coding value receiving circuit and a decoding circuit by hardware circuits.

In order to clearly describe the operations of the encoder 110, the decoder 120 and the codec chip 100, an example is provided below with reference of the codec chip 100 of FIG. 1C.

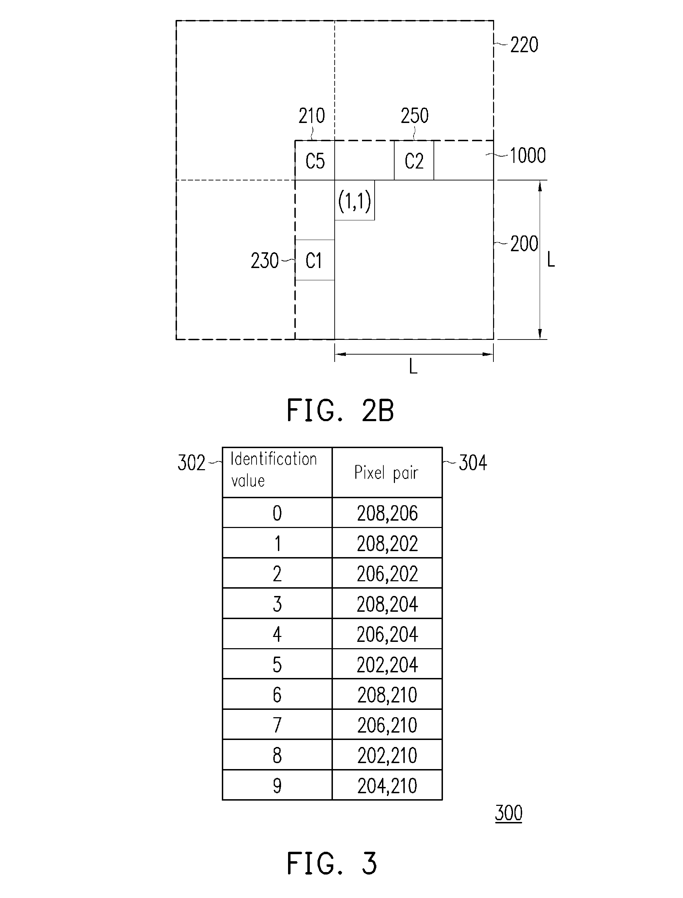

FIG. 2A and FIG. 2B are schematic diagrams of an image coding operation according to the first exemplary embodiment of the disclosure.

Referring to FIG. 2A, taking the two-color mode as an example, and it is assumed that a size of the received first coding unit 200 in a frame is L×L, where L is a positive integer. For example, the coding module 112 selects two pixels from a plurality of the pixels within an adjacent area of the first coding unit 200 to serve as a first index pixel and a second index pixel. However, the disclosure is not limited thereto. For example, in another exemplary embodiment, the coding module 112 selects two pixels from all of the pixels in the frame to serve as the first index pixel and the second index pixel. In the present exemplary embodiment, the adjacent area includes a plurality of pixels (which are referred to as third pixels) in at least one coding unit 220 (which is referred to as at least one second coding unit 220) located adjacent to the first coding unit 200, where the third pixels are located adjacent to the first coding unit 200. It should be noticed that in view of a decoding sequence of the frame where the first coding unit 200 and the at least one second coding unit 220 are located, the at least one second coding unit 220 has been decoded before the first coding unit 200 is decoded. In other words, the adjacent area does not include the currently encoded coding unit and/or an area to be decoded after encoding of the currently encoded coding unit is completed in the decoding process. However, a range of the adjacent area is not limited by the disclosure, for example, in another exemplary embodiment, the adjacent area may also include the currently encoded coding unit and/or a non-decoded area in the frame.

To be specific, the third pixels are respectively a pixel 202 and a pixel 204 located adjacent to an upper edge and a left edge of the pixel in a 1^{st} column and a 1^{st} row of the first coding unit 200, a pixel 206 located adjacent to an upper edge of the pixel in an L^{th} column and the 1^{st} row of the first coding unit 200, a pixel 208 located adjacent to a left edge of the pixel in the 1^{st} column and an L^{th} row of the first coding unit 200, and a pixel 210 located to an upper left corner of the pixel in the 1^{st} column and the 1^{st} row of the first coding unit 200.

In the exemplary embodiment that applies the two-color mode, the encoder 110 further includes a pixel pair table establishing module (not shown), the pixel pair table establishing module establishes a pixel pair table to record identification values and pixel pairs corresponding to the third pixels. For example, the pixel pair table establishing module generates a plurality of pixel pairs according to the third pixels (i.e. the pixel 202, the pixel 204, the pixel 206, the pixel 208 and the pixel 210), and records the identification value corresponding to each pixel pair and colors of each pixel pair corresponding to the identification value into the pixel pair table. It should be noticed that in the present exemplary embodiment, the pixel pair table establishing module generates the pixel pairs according to the set of the pixel 202, the pixel 204, the pixel 206, the pixel 208 and the pixel 210. However, the disclosure is not limited thereto, and in another exemplary embodiment, the adjacent area may include an adjacent area 1000 (shown in FIG. 2B) located adjacent to the first coding unit 200 in the at least one second coding unit 220 located adjacent to the first coding unit 200. Therefore, the third pixels in the adjacent area 1000 may include the pixel 210 located to the upper left corner of the pixel in the 1^{st} column and the 1^{st} row of the first coding unit 200, any pixel 230 located adjacent to a left edge of the first coding unit 200 in the adjacent area 1000, and any pixel 250 located adjacent to an upper edge of the first coding unit 200 in the adjacent area 1000. Therefore, the pixel pair table establishing module can generate a plurality of pixel pairs according to a set of the pixel 210, the pixel 230 and the pixel 250. Moreover, in another exemplary embodiment that applies the palette mode, the encoder 110 directly selects two pixels from a plurality of pixels in the first coding unit 200 to serve as the first index pixel and the second index pixel.

FIG. 3 is an example of a pixel pair table according to the first exemplary embodiment of the disclosure.

Referring to FIG. 2A and FIG. 3, the pixel pair table establishing module generates a plurality of pixel pairs according to the pixel 202, the pixel 204, the pixel 206, the pixel 208 and the pixel 210, and records the pixel pairs and the colors thereof in a pixel pair field 304 of the pixel pair table 300. Moreover, the pixel pair table establishing module also records the identification value (0-9) corresponding to each of the pixel pairs in an identification value field 302. For example, in the pixel pair table 300, the identification value of 0 corresponds to the pixel pair including the pixel 208 and the pixel 206, and colors of the pixel 208 and the pixel 206 in the pixel pair are respectively C1 and C2. Deduced by analogy, each identification value corresponds to the pixel pair thereof and the colors represented by the pixel pair. In this way, the color selecting module 114 can select one of the pixel pairs according to the pixel pair table 300, and the two pixels in the pixel pair selected by the color selecting module 114 are set as the first index pixel and the second index pixel.

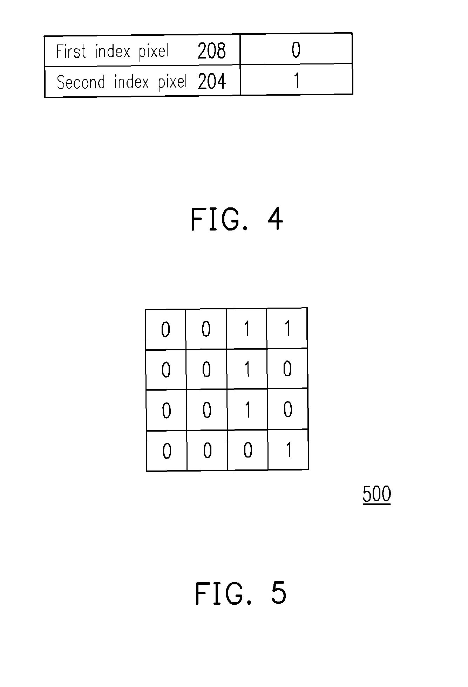

FIG. 4 is an example of setting index values according to the first exemplary embodiment of the disclosure.

Referring to FIG. 4, in the present exemplary embodiment, the color selecting module 114 selects the pixel pair (i.e. the pixel 208 and the pixel 204) corresponding to the identification value of 3 to serve as the first index pixel 208 and the second index pixel 204. Therefore, the index setting module 116 sequentially sets an index value corresponding to the first index pixel 208 to 0 and sets an index value corresponding to the second index pixel 204 to 1. Thereafter, during the operation that the coding module 112 transmits the coding value to the decoder 120, the coding module 112 also transmits the identification value (i.e. 3) to the decoder 120.

FIG. 5 is an example of establishing an index map according to the first exemplary embodiment of the disclosure.

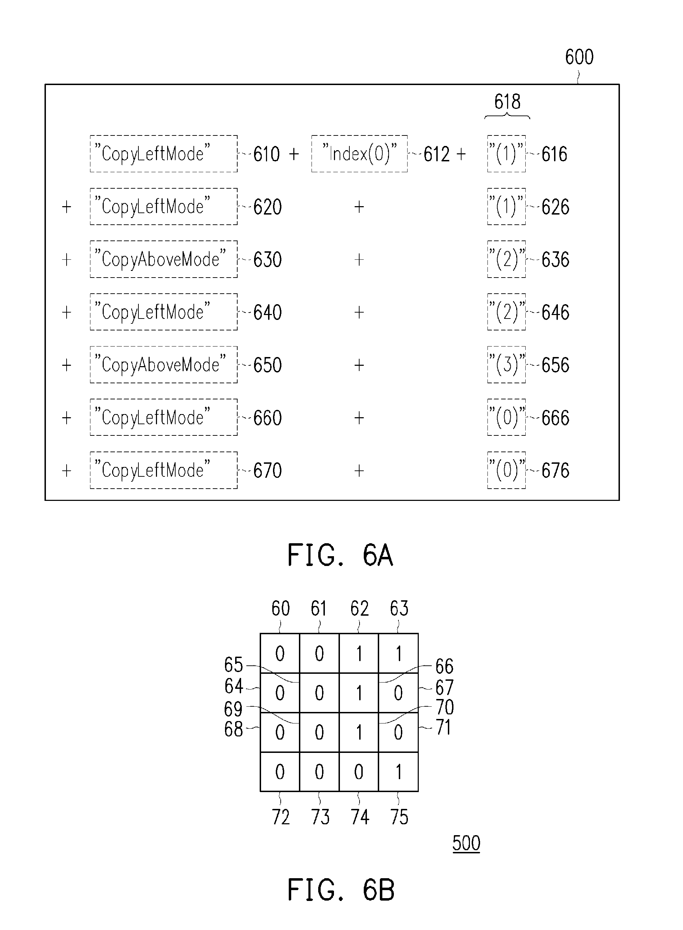

In the present exemplary embodiment, the coding module 112 of the encoder 110 is not limited to use a specific scanning method to scan and encode the coding unit in the frame. For example, in an exemplary embodiment, the coding module 112 can scan and encode the coding unit in the frame by using a Z-scan, and in another exemplary embodiment, the coding module 112 scans and encodes the coding unit in the frame by using a horizontal traverse scan or a vertical traverse scan. To be specific, in FIG. 5, FIG. 6A and FIG. 6B, convert coordinates corresponding to the horizontal traverse scan and coordinates corresponding to the vertical traverse scan into coordinates corresponding to the Z-scan to perform the scan and encoding operations to the coding unit in the frame.

Referring to FIG. 5, the index map establishing module 118 indexes each of the pixels in the first coding unit 200 to generate an index map 500 by using the two-color mode according to the index value (i.e. 0) corresponding to the first index pixel 208 and the index value (i.e. 1) corresponding to the second index pixel 204. In other words, the color of each pixel of the first coding unit 200 in the index map 500 is presented by the index value (i.e. 0) corresponding to the first index pixel 208 or the index value (i.e. 1) corresponding to the second index pixel 204. Particularly, in the present exemplary embodiment, it is assumed that the size of the first coding unit 200 is 4×4, so that the index values corresponding to each pixel of the first coding unit 200 in the index map 500 are arranged in an array of 4×4.

Moreover, in the present exemplary embodiment, in the operation of generating the coding value corresponding to the first coding unit 200 according to the index map 500, the coding module 112 only records the index value corresponding to the 1^{st} scanned pixel in the pixels of the first coding unit 200 in the coding value. Here, the index value corresponding to the 1^{st} scanned pixel in the pixels of the first coding unit 200 is the same to the index value of the index in the 1^{st} column and the 1^{st} row of the index map 500.

FIG. 6A and FIG. 6B illustrate an example of generating a coding value according to the first exemplary embodiment of the disclosure.

Referring to FIG. 6A and FIG. 6B, after the index map establishing module 118 indexes each of the pixels in the first coding unit 200 to generate the index map 500, the coding module 112 generates a coding value 600 corresponding to the first coding unit 200 according to the index map 500. In the present embodiment, the coding value 600 includes the index value corresponding to the 1^{st} pixel in the pixels of the first coding unit 200 (i.e. the index value of the index in the 1^{st} column and the 1^{st} row of the index map 500), a code mode and a value corresponding to a running character. For example, since an index value of one pixel (i.e. a pixel 61) following the 1^{st} pixel (i.e. the pixel 60) is the same to the index value of the 1^{st} pixel, an index value of one pixel (i.e. a pixel 63) following a 3^{rd} pixel (i.e. a pixel 62) is the same to an index value of the 3^{rd} pixel, and the index value of the 1^{st} pixel is different to the index value of the 3^{rd} pixel in the index map 500, in the coding value 600, the coding module 112 uses a copy left mode 610, an index 612 (i.e. 0) in the 1^{st} column and the 1^{st} row of the index map 500 and a value 618 corresponding to the running character to describe the 1^{st} pixel (i.e. the pixel 60) and a follow-up pixel (i.e. the pixel 61) of the first coding unit 200, for example, the value 618 corresponding to the running character includes a shift number (1)616. Moreover, in the coding value 600, the coding module 112 uses a copy left mode 620 and a shift number (1)626 to describe the 3^{rd} pixel (i.e. the pixel 62) located behind the 1^{st} pixel in the first coding unit 200 and the following pixel (i.e. the pixel 63).

It should be noticed that in the present exemplary embodiment, the index map 500 established by the index map establishing module 118 is generated by indexing each of the pixels in the first coding unit 200 by using the two-color mode. Therefore, the coding value used for describing the pixel 62 and the pixel 63 of the first coding unit 200 only includes the copy left mode 620 and the shift number (1)626. In other words, since the index value of the 1^{st} pixel (i.e. the pixel 60) in the index map 500 is different to the index value of the 3^{rd} pixel (i.e. the pixel 62), when the decoder 120 receives the copy left mode 620 and the shift number (1)626, the decoder 120 can derive that the index value of the 3^{rd} pixel is 1 only according to the index value (i.e. 0) of the 1^{st} pixel in the index map 500.

In the present exemplary embodiment, since index values of a pixel (i.e. a pixel 64) corresponding to the index in the 1^{st} column and the 2^{nd} row of the index map 500 and the following two pixels (i.e. a pixel 65 and a pixel 66) are respectively the same to the index values of the pixel (i.e. the pixel 60) corresponding to the index in the 1^{st} column and the 1^{st} row of the index map 500 and the following two pixels (i.e. the pixel 61 and the pixel 62), in the coding value 600, the coding module 112 uses a copy above mode 630 and a shift number (2)636 to describe the pixel (i.e. the pixel 64) in the first coding unit 200 corresponding to the index in the 1^{st} column and the 2^{nd} row of the index map 500 and the following two pixels (i.e. the pixel 65 and the pixel 66). Particularly, when the decoder 120 receives the copy above mode 630, the decoder 120 can derive that the index values of the pixel (i.e. the pixel 64) corresponding to the index in the 1^{st} column and the 2^{nd} row of the index map 500 and the following two pixels (i.e. the pixel 65 and the pixel 66) are respectively the same to the index values of the pixel (i.e. the pixel 60) corresponding to the index in the 1^{st} column and the 1^{st} row of the index map 500 and the following two pixels (i.e. the pixel 61 and the pixel 62) according to the copy above mode 630 and the shift number (2)636.

Since an index value of a pixel (i.e. a pixel 67) corresponding to the index in the 4^{th} column and the 2^{nd} row of the index map 500 is different to the index value of the pixel (i.e. the pixel 63) corresponding to the index in the 4^{th} column and the 1^{st} row of the index map 500, and index values of two pixels (i.e. a pixel 68 and a pixel 69) following the pixel (i.e. the pixel 67) corresponding to the index in the 4^{th} column and the 2^{nd} row of the index map 500 are respectively the same to the index value of the pixel (i.e. the pixel 67) corresponding to the index in the 4^{th} column and the 2^{nd} row of the index map 500, in the coding value 600, the coding module 112 uses a copy left mode 640 and a shift number (2)646 to describe the pixel (i.e. the pixel 67) in the first coding unit 200 corresponding to the index in the 4^{th} column and the 2^{nd} row of the index map 500 and the following two pixels (i.e. the pixel 68 and the pixel 69). In other words, when the decoder 120 receives the copy left mode 640 and the shift number (2)646, the decoder 120 can derive that the index value corresponding to the index in the 4^{th} column and the 2^{nd} row of the index map 500 is 0 and the index values of the two pixels (i.e. the pixel 68 and the pixel 69) following the pixel 67 are also 0 only according to the index value (i.e. 1) corresponding to the index in the 4^{th} column and the 1^{st} row of the index map 500.

Moreover, since the index values of a pixel (i.e. a pixel 70) corresponding to an index in the 3^{rd} column and the 3^{rd} row of the index map 500 and three pixels (i.e. a pixel 71, a pixel 72 and a pixel 73) following the pixel corresponding to the index in the 3^{rd} column and the 3^{rd} row of the index map 500 are respectively the same to the index values of the pixel 66 and the three pixels (i.e. the pixel 67, the pixel 68 and the pixel 69) following the pixel 66, the coding module 112 uses a copy above mode 650 and a shift number (3)656 to describe the pixel (i.e. the pixel 70) in the first coding unit 200 corresponding to the index in the 3^{rd} column and the 3^{rd} row of the index map 500 and the following three pixels (i.e. the pixel 71, the pixel 72 and the pixel 73). In other words, when the decoder 120 receives the copy above mode 650, the decoder 120 can derive that the index values of the pixel (i.e. the pixel 70) corresponding to the index in the 3^{rd} column and the 3^{rd} row of the index map 500 and the following three pixels (i.e. the pixel 71, the pixel 72 and the pixel 73) are respectively the same to the index values of the pixel (i.e. the pixel 66) corresponding to the index in the 3^{rd} column and the 2^{nd} row of the index map 500 and the following three pixels (i.e. the pixel 67, the pixel 68 and the pixel 69) according to the copy above mode 650 and the shift number (3)656.

In the present exemplary embodiment, since an index value of a pixel (i.e. a pixel 74) corresponding to the index in the 3^{rd} column and the 4^{th} row of the index map 500 is different to the index value of the pixel (i.e. the pixel 70) corresponding to the index in the 3^{rd} column and the 3^{rd} row of the index map 500, and an index value of a pixel (i.e. a pixel 75) following the pixel (i.e. the pixel 74) corresponding to the index in the 3^{rd} column and the 4^{th} row of the index map 500 is different to the index value of the pixel 74, in the coding value 600, the coding module 112 uses a copy left mode 660 and a shift number (0)666 to describe the pixel (i.e. the pixel 74) in the first coding unit 200 corresponding to the index in the 3^{rd} column and the 4^{th} row of the index map 500. When the decoder 120 receives the copy left mode 660 and the shift number (0)666, the decoder 120 can derive that the index value of the pixel corresponding to the index in the 3^{rd} column and the 4^{th} row of the index map 500 is 0 only according to the index value (i.e. 1) of the pixel corresponding to the index in the 3^{rd} column and the 3^{rd} row of the index map 500.

Thereafter, since the index value of the pixel (i.e. the pixel 75) corresponding to the index in the 4^{th} column and the 4^{th} row of the index map 500 is different to the index value of the pixel 74, in the coding value 600, the coding module 112 uses a copy left mode 670 and a shift number (0)676 to describe the pixel in the first coding unit 200 corresponding to the index in the 4^{th} column and the 4^{th} row of the index map 500. Namely, when the decoder 120 receives the copy left mode 670 and the shift number (0)676, the decoder 120 can derive that the index value of the pixel corresponding to the index in the 4^{th} column and the 4^{th} row of the index map 500 is 1 only according to the index value (i.e. 0) of the pixel corresponding to the index in the 4^{th} column and the 3^{rd} row of the index map 500. Based on the above description, according to the example of generating the coding value shown in FIG. 6A and FIG. 6B, it is known that the coding value includes the index value of the 1^{st} scanned pixel in the pixels of the first coding unit 200, at least one code mode and at least one value corresponding to at least one running character.

It should be noticed that when the coding module 112 generates the coding value 600 corresponding to the first coding unit 200 according to the index map 500 and transmits the coding value 600 to the decoder 120, the coding module 112 is only required to record and transmit the index value corresponding to the 1^{st} scanned pixel in the pixels of the first coding unit 200, and the decoder 120 can determine the index value of the currently decoded pixel according to other information in the coding value 600 and the index values of the decoded pixels in the first coding unit 200, so as to effectively decrease a data transmission amount in coding computation and improve coding and decoding performance.

In overall, in the embodiment that applies the two-color mode, the coding module 112 transmits the coding value and the identification value to the decoder, and according to the above description, the coding value may include the index value of the 1^{st} scanned pixel in the pixels of the first coding unit 200, at least one code mode and at least one value corresponding to at least one running character.

It should be noticed that the disclosure is not limited to index each of the pixels in the first coding unit by using the aforementioned two-color mode. For example, in another exemplary embodiment, each of the pixels in the first coding unit is indexed by using the palette mode to generate the index map corresponding to the first coding unit. To be specific, in the exemplary embodiment applying the palette mode, the encoder 110 does not establish the pixel pair table shown in FIG. 3, for example, the encoder 110 directly transmits the coding value, the color of the first index pixel and the color of the second index pixel to the decoder 120 other than transmitting the identification value corresponding to the color of the first index pixel and the color of the second index pixel. Moreover, the coding value includes the index value of the 1^{st} scanned pixel in the pixels of the first coding unit 200, at least one code mode and a value corresponding to at least one running character.

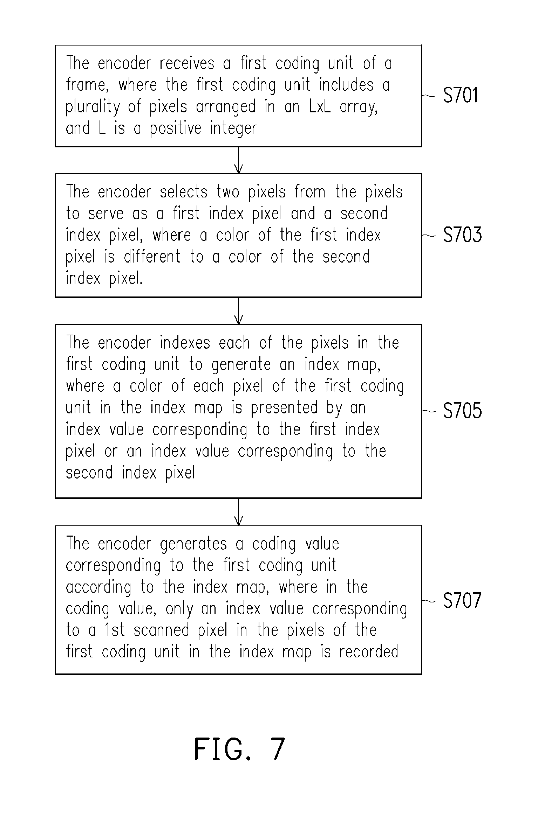

FIG. 7 is a flowchart illustrating an encoding method according to the first exemplary embodiment of the disclosure.

Referring to FIG. 7, in step S701, the encoder 110 receives a first coding unit of a frame, where the first coding unit includes a plurality of pixels arranged in an L×L array, and L is a positive integer.

In step S703, the encoder 110 selects two pixels from the pixels to serve as a first index pixel and a second index pixel, where a color of the first index pixel is different to a color of the second index pixel. For example, in the two-color mode, the encoder 110 establishes a pixel pair table, and transmits an identification value of two pixels selected according to the pixel pair table to the decoder 120. In the palette mode, the encoder 110 directly transmits the colors of the two pixels to the decoder 120.

In step S705, the encoder 110 indexes each of the pixels in the first coding unit to generate an index map, where a color of each pixel of the first coding unit in the index map is presented by an index value corresponding to the first index pixel or an index value corresponding to the second index pixel.

In step S707, the encoder 110 generates a coding value corresponding to the first coding unit according to the index map, where in the coding value, only an index value corresponding to a 1^{st} scanned pixel in the pixels of the first coding unit in the index map is recorded, i.e. only the index value of the 1^{st} scanned pixel in the pixels of the first coding unit in the index map is recorded in the coding value.

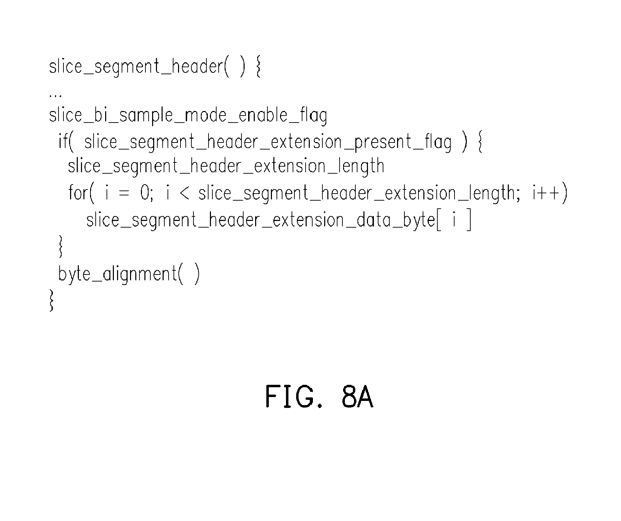

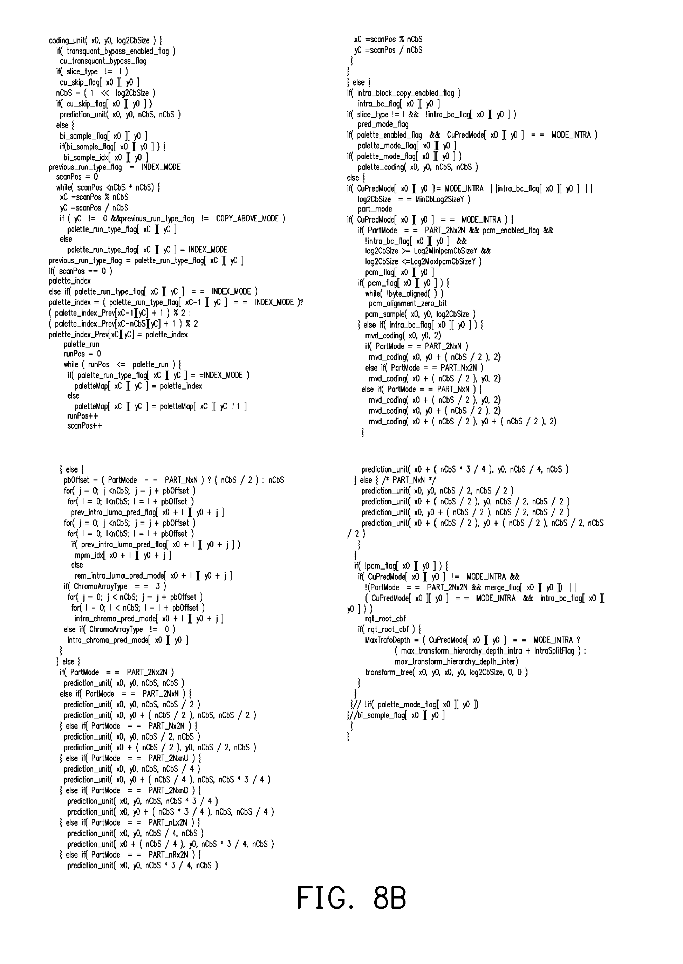

FIG. 8A and FIG. 8B are diagrams illustrating program codes used for decoding according to the first exemplary embodiment of the disclosure.

Referring to FIG. 8A and FIG. 8B, in the decoding operation, the decoder 120 can determine whether to use the two-color mode to perform decoding according to formulas shown in the program codes of FIG. 8A, where a parameter " slice_bi_sample_mode_enable_flag" is used for indicating whether to use the two-color mode. For example, when a value of the parameter "slice_bi_sample_mode_enable_flag" is set to 1, the decoder 120 uses the two-color mode to perform a decoding operation to a frame to be decoded. Then, the decoder 120 determines whether to use the two-color mode to perform a decoding operation to the coding unit to be decoded according to formulas shown in the program codes of FIG. 8B. For example, when a value of "bi_sample_flag" is set to 1, the decoder 120 uses the two-color mode to perform the decoding operation to the coding unit to be decoded. It should be noticed that the disclosure is not limited thereto. For example, in another exemplary embodiment, the decoder 120 uses the palette mode to perform the decoding operation to the coding unit to be decoded. Particularly, the value of "slice_bi_sample_mode_enable_flag" can also be preset to 1, and when the value of "slice_bi_sample_mode_enable_flag" is preset to 1, the decoder 120 does not execute the step of determining the value of " slice_bi_sample_mode_enable_flag" in the decoding operation.

Referring to FIG. 8B, in the operation that the decoder 120 reconstructs the index map according to the coding value, the decoder 120 reconstructs the index map according to the index value of the index pixel corresponding to the 1^{st} column and 1^{st} row, the code mode (the copy above mode or the copy left mode), the value corresponding to the running character, and the decoder 120 determines whether to use the copy above mode or the copy left mode to reconstruct the index map according to the formulas shown in the program codes of FIG. 8B. To be specific, when a parameter "palette_run_type_flag" is set to 1, the decoder 120 uses the copy above mode to reconstruct the pixels in the index map, and determines a shift number according to a parameter "palette_run", where the pixels reconstructed by using the copy above mode are the same to at least two pixels with the corresponding shift number in an above row of the index map. Comparatively, when the parameter "palette_run_type_flag" is set to 0, the decoder 120 uses the copy left mode to describe the pixels in the currently encoded coding unit, and determines a shift number according to the parameter "palette_run", where the pixels reconstructed by using the copy left mode are the same to at least one pixel with the corresponding shift number following the pixel in the index map. Moreover, as described above, in the disclosure, a color of each pixel of the coding unit in the index map is presented by index values of two index pixels. For example, a parameter "bi_sample_idx" in the formula is used for representing index values of a plurality of candidate index pixels, and a parameter "palette_index" is used for representing index values of the aforementioned two index pixels selected from a plurality of the candidate index pixels. Particularly, in the disclosure, the encoder 110 transmits the index value of the index pixel corresponding to the 1^{st} column and the 1^{st} row in the index map to the decoder 120 through the parameter "palette_index", in this way, the decoder 120 can determine the index value of the currently decoded pixel according to other information in the coding value and the index values of the decoded pixels in the coding unit.

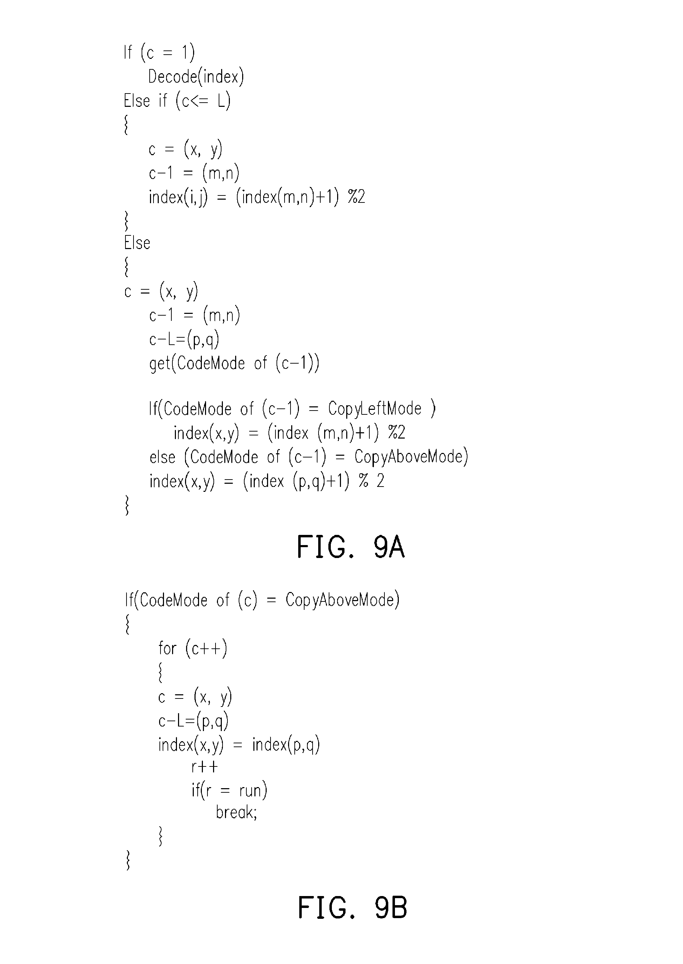

FIG. 9A is a diagram illustrating program codes used for scanning the coding unit in the copy left mode according to the first exemplary embodiment of the disclosure. In the present exemplary embodiment, it is assumed that the code mode used by the currently decoded the pixel is the copy left mode, where the code mode is represented by a parameter "CodeMode" in FIG. 9A, and the copy left mode in the code mode is represented by a parameter "CopyLeftMode" in FIG. 9A.

Referring to FIG. 9A, in the present exemplary embodiment, the decoding module 124 of the decoder 120 is not limited to use a specific scanning method to scan and decode the coding unit in the frame. For example, in an exemplary embodiment, the decoding module 124 can scan and decode the coding unit in the frame by using a Z-scan, and in another exemplary embodiment, the decoding module 124 scans and decodes the coding unit in the frame by using a horizontal traverse scan or a vertical traverse scan. To be specific, the program codes shown in FIG. 9A convert coordinates corresponding to the horizontal traverse scan and coordinates corresponding to the vertical traverse scan into coordinates corresponding to the Z-scan to perform the scan and decoding operations to the coding unit in the frame. Referring to FIG. 9A, it is assumed that the code mode used by the currently decoded pixel is the copy left mode (i.e. "CopyLeftMode").

In the present exemplary embodiment, the index values corresponding to the pixels of a coding unit in the index map are arranged in an L×L array. As shown in FIG. 9A, it is assumed that the number of scanned indexes in the index map is c. For example, when the decoding module 124 decodes the pixel corresponding to the scanned 1^{st} index in the index map (i.e. c=1), the decoding module 124 reconstructs the index map according to the 1^{st} index of the index map and the value corresponding to the running character. Moreover, when the decoding module 124 decodes the pixel corresponding to a scanned c^{th} index in the index map (for example, 1<c<=L), the decoding module 124 converts the index value of the scanned c^{th} index (i.e. the currently decoded index value) into coordinates (x,y), and converts the index value of the scanned (c-1)^{th} index into coordinates (m,n). Then, the decoding module 124 reconstructs the index map according to the scanned (c-1)^{th} index in the index map and the value corresponding to the running character. Particularly, the value of the scanned c^{th} index in the index map (i.e. index(x,y)) is a remainder obtained by dividing a sum of 1 and the index value corresponding to the coordinates (m,n) (i.e. index(m,n)) by 2.

In another exemplary embodiment, when the decoding module 124 decodes the pixel corresponding to the scanned c^{th} index in the index map (for example, c>L), the decoding module 124 converts the scanned c^{th} index into coordinates (x,y), converts the scanned (c-1)^{th} index into coordinates (m,n), and converts the scanned (c-L)^{th} index into coordinates (p,q). Moreover, the decoding module 124 further determines whether the code mode corresponding to the (c-1)^{th} index is to use the copy above mode or the copy left mode to decode the pixel corresponding to the scanned (c-1)^{th} index in the index map. If the code mode corresponding to the (c-1)^{th} index is to use the copy left mode to decode the pixel corresponding to the scanned (c-1)^{th} index in the index map, the decoding module 124 reconstructs the index map according the scanned (c-1)^{th} index and the value corresponding to the running character, where the value of the scanned c^{th} index in the index map (i.e. index(x,y)) is a remainder obtained by dividing a sum of 1 and the index value corresponding to the coordinates (m,n) (i.e. index(m,n)) by 2. Comparatively, in another exemplary embodiment, if the code mode corresponding to the (c-1)^{th} index is to use the copy above mode (i.e. "CopyAboveMode") to decode the pixel corresponding to the scanned (c-1)^{th} index in the index map, the decoding module 124 reconstructs the index map according the scanned (c-L)^{th} index and the value corresponding to the running character, where the value of the scanned c^{th} index in the index map (i.e. index(x,y)) is a remainder obtained by dividing a sum of 1 and the index value corresponding to the coordinates (p,q) (i.e. index(p,q)) by 2. However, it should be noticed that the disclosure is not limited thereto.

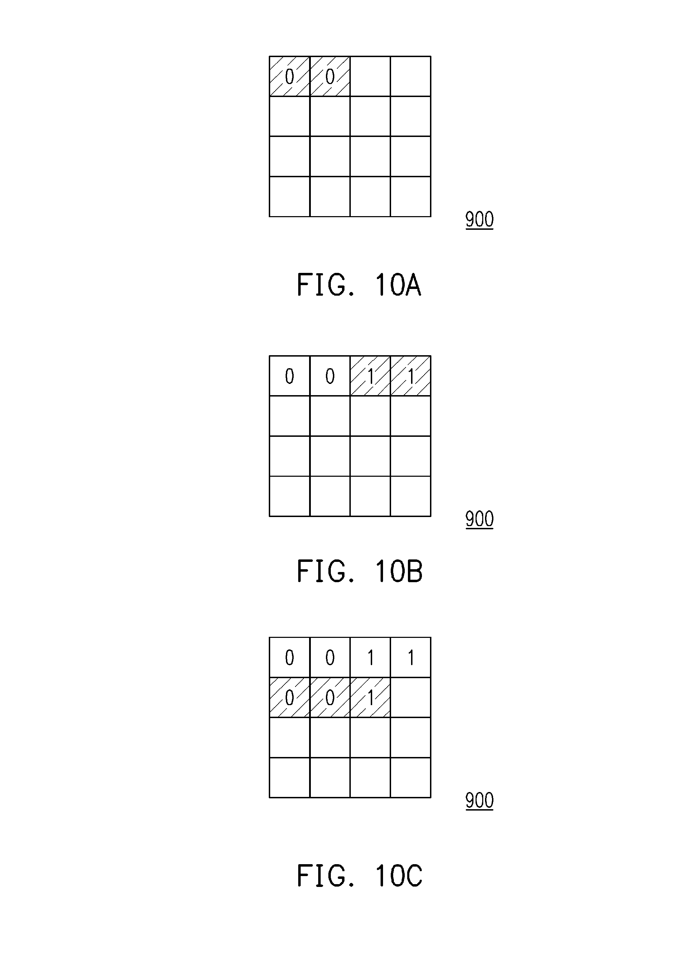

FIG. 9B is a diagram illustrating program codes used for scanning the coding unit in the copy above mode according to the first exemplary embodiment of the disclosure. In the present exemplary embodiment, it is assumed that the code mode used by the currently decoded the pixel is the copy above mode, where the code mode is represented by the parameter "CodeMode" in FIG. 9B, and the shift number in the code mode is represented by a parameter "run" in FIG. 9B. Referring to FIG. 9B, in the present exemplary embodiment, since the code mode used by the currently decoded pixel is the copy above mode, when the code mode received by the decoding module 124 is the copy above mode (i.e. "CopyAboveMode"), the decoding module 124 is only required to copy the index values of the corresponding pixels to the index map to be reconstructed according to the copy above mode and the shift number, so as to reconstruct the index map. For example, the decoding module 124 converts the scanned c^{th} index in the index map into coordinates (x,y), and converts the scanned (c-L)^{th} index into coordinates (p,q), and sets the value of the currently scanned c^{th} index in the index map (i.e. index(x,y)) to the index value corresponding to the coordinates (p,q) (i.e. index(p,q)) according to the value of the shift number "run". Reconstruction of the index map according to the coding value is described below with reference of FIG. 6A and FIG. 10A-FIG. 10G.

FIG. 10A-FIG. 10G are diagrams illustrating an example of reconstructing the index map according to the coding value according to the first exemplary embodiment of the disclosure.

Referring to FIG. 10A and FIG. 6A, in the present exemplary embodiment, the decoding module 124 of the decoder 120 reconstructs the index map corresponding to the first coding unit according to the coding value 600 received by the coding value receiving module 122. Since the index values corresponding to the pixels of the first coding unit 200 in the index map 500 are arranged in a 4×4 array, and the index value of the 1^{st} pixel recorded in the coding value 600 is the index (i.e. 0) in the 1^{st} column and 1^{st} row of the index map 500, the decoding module 124 records the index value corresponding to the 1^{st} pixel of the first coding unit 200 as 0 and records the index value of one pixel following the 1^{st} pixel as 0 in the index map 900 to be reconstructed according to the copy left mode 610 of the coding value 600, the index 612 in the 1^{st} column and the 1^{st} row of the index map 500 and the shift number (1)616.

Referring to FIG. 10B and FIG. 6A, according to the copy left mode 620 and the shift number (1)626, the decoding module 124 learns that the index value of one pixel following the 1^{st} pixel in the index map 900 is the same to the index value of the 1^{st} pixel, and the index value of one pixel following the 3^{rd} pixel is the same to the index value of the 3^{rd} pixel, and the index value of the 1^{st} pixel is different to the index value of the 3^{rd} pixel. For example, the decoding module 124 takes a remainder obtained by dividing a sum of 1 and the index value (i.e. 0) of the pixel in the 2^{nd} column and the 1^{st} row of the index map 500 by 2 as the index value (i.e. 1) of the pixel in the 3^{rd} column and the 1^{st} row. Therefore, the decoding module 124 records both of the index value corresponding to the pixel in the 3^{rd} column and the 1^{st} row of the first coding unit 200 and the index value of one pixel following the 3^{rd} pixel as 1 in the index map 900 according to the index value of the pixel in the 2^{nd} column and the 1^{st} row.

Referring to FIG. 10C and FIG. 6A, according to the copy above mode 630 and the shift number (2)636, the decoding module 124 learns that the index value of the pixel corresponding to the index in the 1^{st} column and the 2^{nd} row of the index map 900 and the index values of two pixels following the pixel corresponding to the index in the 1^{st} column and the 2^{nd} row of the index map 900 are respectively the same to the pixel value of the pixel corresponding to the index in the 1^{st} column and the 1^{st} row of the index map 900 and the index values of the two pixels following the pixel corresponding to the index in the 1^{st} column and the 1^{st} row of the index map 900. For example, the decoding module 124 is only required to copy the index value of the pixel corresponding to the index in the 1^{st} column and the 1^{st} row of the index map 900 and the index values of the two pixels following the pixel corresponding to the index in the 1^{st} column and the 1^{st} row of the index map 900 to serve as the index value of the pixel corresponding to the index in the 1^{st} column and the 2^{nd} row of the index map 900 and the index values of the two pixels following the pixel corresponding to the index in the 1^{st} column and the 2^{nd} row of the index map 900. Therefore, the decoding module 124 respectively records the index value of the pixel in the first coding unit 200 corresponding to the index in the 1^{st} column and the 2^{nd} row of the index map and the index values of the two pixels following the pixel corresponding to the index in the 1^{st} column and the 2^{nd} row of the index map 900 as 0, 0 and 1 in the index map 900.

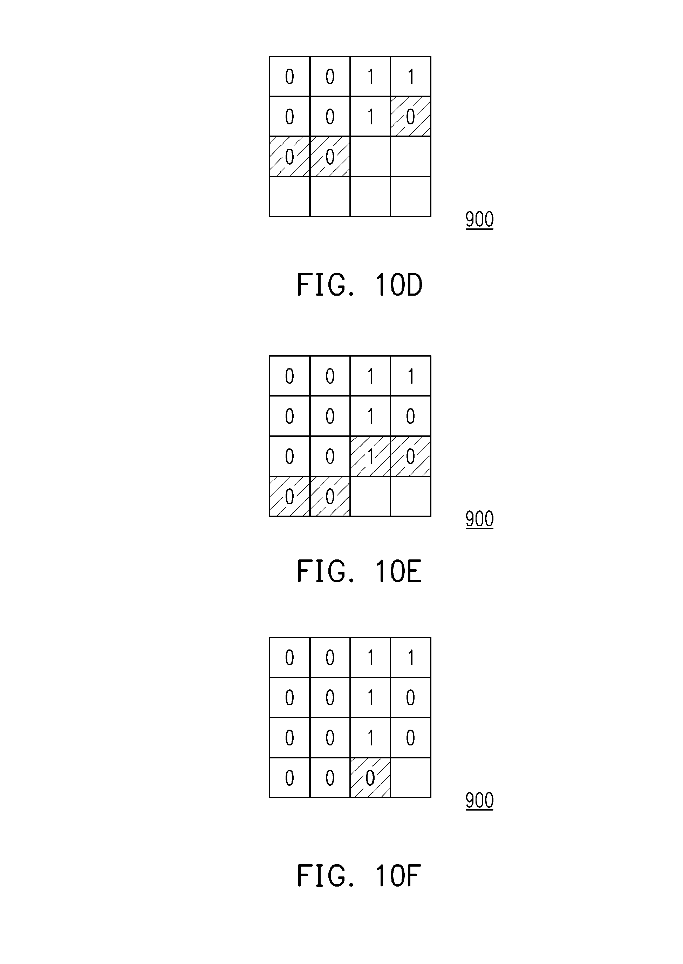

Referring to FIG. 10D and FIG. 6A, according to the copy left mode 640 and the shift number (2)646, the decoding module 124 learns that the index value of the pixel corresponding to the index in the 4^{th} column and the 2^{nd} row of the index map 900 is different to the index value of the pixel corresponding to the index in the 4^{th} column and the 1^{st} row of the index map 900, and the index values of two pixels following the pixel corresponding to the index in the 4^{th} column and the 2^{nd} row of the index map 900 are the same to the index value of the pixel corresponding to the index in the 4^{th} column and the 2^{nd} row of the index map 900. For example, the decoding module 124 takes a remainder obtained by dividing a sum of 1 and the index value (i.e. 1) of the pixel in the 4^{th} column and the 1^{st} row of the index map 500 by 2 as the index value (i.e. 0) of the index in the 4^{th} column and the 2^{nd} row. Therefore, the decoding module 124 records the index value of the pixel in the first coding unit 200 corresponding to the index in the 4^{th} column and the 2^{nd} row of the index map 900 as 0 and records the index values of two pixels following the pixel corresponding to the index in the 4^{th} column and the 2^{nd} row of the index map 900 as 0 in the index map 900.

Referring to FIG. 10E and FIG. 6A, according to the copy above mode 650 and the shift number (3)656 in the received coding value, the decoding module 124 learns that the index value of the pixel corresponding to the index in the 3^{rd} column and the 3^{rd} row of the index map 900 and the index values of three pixels following the pixel corresponding to the index in the 3^{rd} column and the 3^{rd} row of the index map 900 are respectively the same to the pixel value of the pixel corresponding to the index in the 3^{rd} column and the 2^{nd} row of the index map 900 and the index values of the three pixels following the pixel corresponding to the index in the 3^{rd} column and the 2^{nd} row of the index map 900. For example, the decoding module 124 is only required to copy the index value of the pixel corresponding to the index in the 3^{rd} column and the 2^{nd} row of the index map 900 and the index values of the three pixels following the pixel corresponding to the index in the 3^{rd} column and the 2^{nd} row of the index map 900 to serve as the index value of the pixel corresponding to the index in the 3^{rd} column and the 3^{rd} row of the index map 900 and the index values of the three pixels following the pixel corresponding to the index in the 3^{rd} column and the 3^{rd} row of the index map 900. Therefore, the decoding module 124 respectively records the index value of the pixel in the first coding unit 200 corresponding to the index in the 3^{rd} column and the 3^{rd} row of the index map 900 and the index values of the three pixels following the pixel corresponding to the index in the 3^{rd} column and the 3^{rd} row of the index map 900 as 1, 0, 0 and 0 in the index map 900.

Referring to FIG. 10F and FIG. 6A, according to the received copy left mode 660 and the shift number (0)666, the decoding module 124 learns that the index value of the pixel corresponding to the index in the 3^{rd} column and the 4^{th} row of the index map 900 is different to the index value of the pixel corresponding to the index in the 3^{rd} column and the 3^{rd} row of the index map 900. For example, the decoder 120 takes a remainder obtained by dividing a sum of 1 and the index value (i.e. 1) of the pixel in the 3^{rd} column and the 3^{rd} row of the index map 500 by 2 as the index value (i.e. 0) of the index in the 3^{rd} column and the 4^{th} row. Therefore, the decoding module 124 records the index value of the pixel in the first coding unit 200 corresponding to the index in the 3^{rd} column and the 4^{th} row of the index map 900 as 0 in the index map 900.

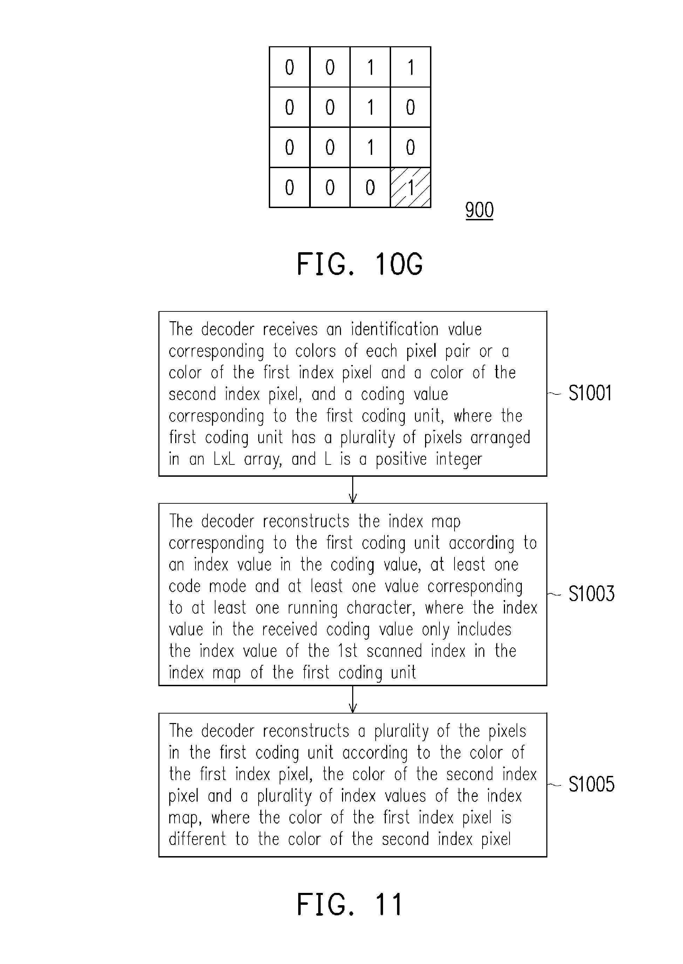

Referring to FIG. 10G and FIG. 6A, according to the copy left mode 670 and the shift number (0)676, the decoding module 124 learns that the index value of the pixel corresponding to the index in the 4^{th} column and the 4^{th} row of the index map 900 is different to the index value of the pixel corresponding to the index in the 4^{th} column and the 3^{rd} row of the index map 900. For example, the decoder 120 takes a remainder obtained by dividing a sum of 1 and the index value (i.e. 0) of the pixel in the 4^{th} column and the 3^{rd} row of the index map 500 by 2 as the index value (i.e. 1) of the index in the 4^{th} column and the 4^{th} row. Therefore, the decoding module 124 records the index value of the pixel in the first coding unit 200 corresponding to the index in the 4^{th} column and the 4^{th} row of the index map 900 as 1 in the index map 900.

In the present exemplary embodiment, the decoder 120 also records a pixel pair table 300 (shown in FIG. 3) corresponding to the encoder 110, so that the decoding module 124 can also identify the color of the first index pixel and the color of the second index pixel through the pixel pair table 300 according to the identification value corresponding to the first index pixel and the second index pixel that is received by the coding value receiving module 122. For example, the identification value received by the coding value receiving module 122 is 3, and the decoding module 124 can learn that the first index pixel and the second index pixel are respectively the pixel 208 and the pixel 204 through the pixel pair table 300 according to the identification value, and the colors of the pixel 208 and the pixel 204 are respectively C1 and C2. Thereafter, the decoding module 124 can reconstruct the pixels of the first coding unit 200 according to the index map 900 and the colors corresponding to the first index pixel and the second index pixel.

FIG. 11 is a flowchart illustrating a decoding method according to the first exemplary embodiment of the disclosure.

Referring to FIG. 11, in step S1001, the decoder 120 receives an identification value corresponding to colors of each pixel pair or a color of the first index pixel and a color of the second index pixel, and a coding value corresponding to the first coding unit, where the first coding unit has a plurality of pixels arranged in an L×L array, and L is a positive integer.

In step S1003, the decoder 120 reconstructs the index map corresponding to the first coding unit according to an index value in the coding value, at least one code mode and at least one value corresponding to at least one running character, where the index value in the received coding value only includes the index value of the 1^{st} scanned index in the index map of the first coding unit.

In step S1005, the decoder 120 reconstructs a plurality of the pixels in the first coding unit according to the color of the first index pixel, the color of the second index pixel and a plurality of index values of the index map, where the color of the first index pixel is different to the color of the second index pixel.

### [Second exemplary embodiment]

An encoding method and a decoding method and a codec system thereof of the second exemplary embodiment are substantially the same to the encoding method and the decoding method and the codec system thereof of the first exemplary embodiment, and a difference therebetween is that in the second exemplary embodiment, two pixels are selected to serve as the first index pixel and the second index pixel by using a statistical and quantitative method. The difference between the second exemplary embodiment and the first exemplary embodiment is described below with reference of the system of the first exemplary embodiment and the referential numbers of the components therein.

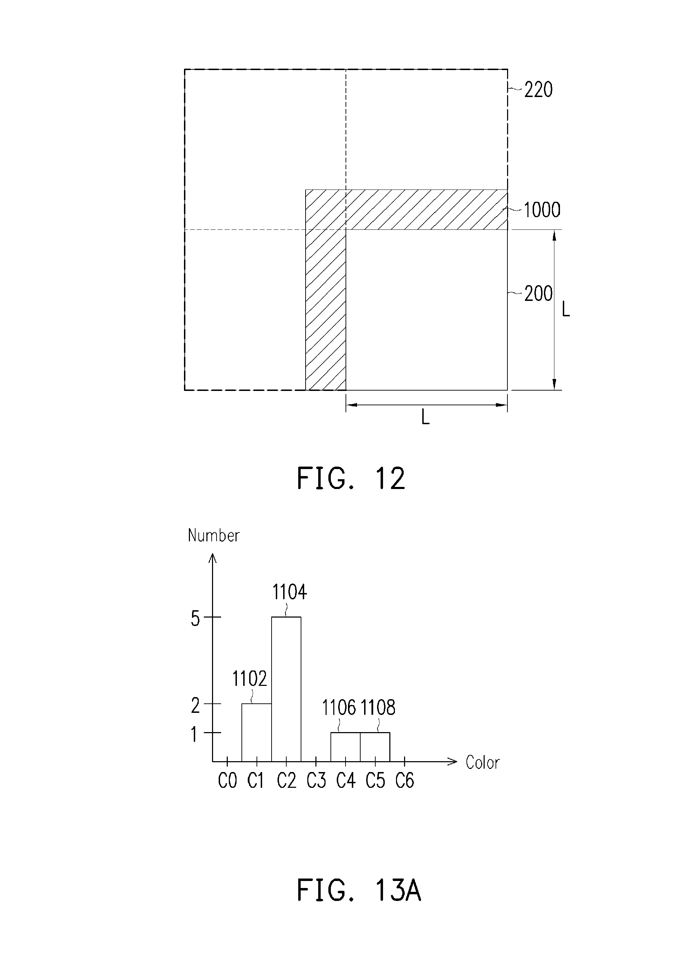

FIG. 12 is a schematic diagram of an image coding operation according to the second exemplary embodiment of the disclosure.

Referring to FIG. 12, the same to the first exemplary embodiment, the coding module 112 selects two pixels from a plurality of pixels within an adjacent area of the first coding unit 200 to serve as the first index pixel and the second index pixel. However, the disclosure is not limited thereto, for example, in another exemplary embodiment, the coding module 112 can also select two pixels from all of the pixels in the frame to serve as the first index pixel and the second index pixel. It is assumed that a size of the first coding unit 200 in a frame received by the coding module 112 is L×L, where L is a positive integer. Particularly, in the present exemplary embodiment, the adjacent area includes a plurality of pixels (which are referred to as third pixels) in at least one second coding unit 220 located adjacent to the first coding unit 200, where the third pixels are located adjacent to the first coding unit 200. Here, the area in which the third pixels are located is the adjacent area 1000. Namely, the coding module 112 selects two pixels from a plurality of the third pixels within the adjacent area 1000 to serve as the first index pixel and the second index pixel. It should be noticed that in a decoding sequence of the frame where the first coding unit 200 and the at least one second coding unit 220 are located, the at least one second coding unit 220 has been decoded before the first coding unit 200 is decoded. In other words, the adjacent area does not include the currently encoded coding unit and/or an area to be decoded after encoding of the currently encoded coding unit is completed in the decoding process. However, a range of the adjacent area is not limited by the disclosure, for example, in another exemplary embodiment, the adjacent area may also include the currently encoded coding unit and/or a non-decoded area in the frame.

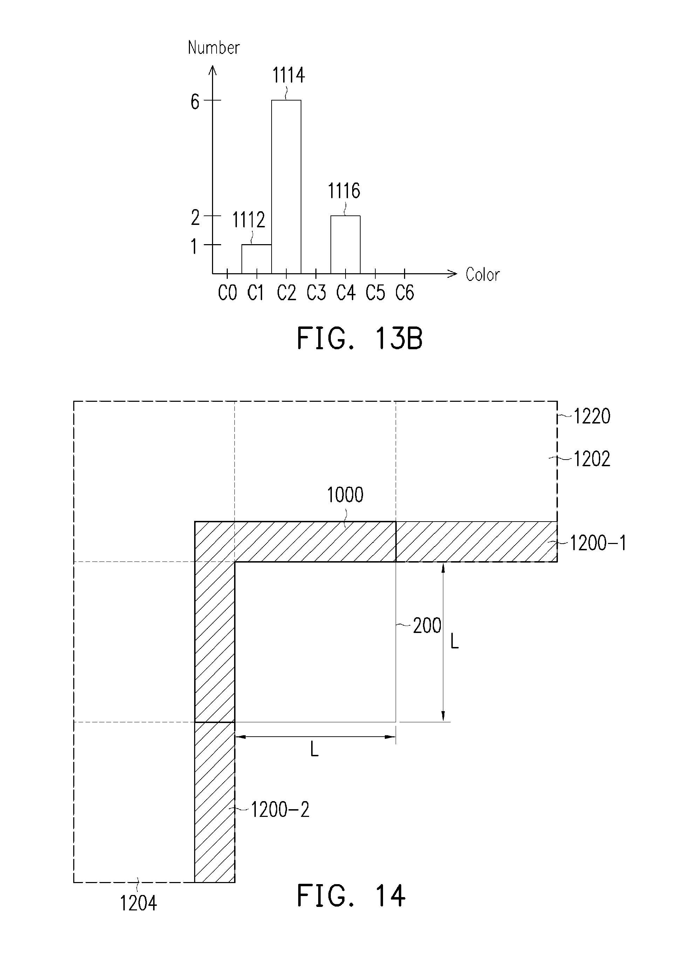

FIG. 13A and FIG. 13B are schematic diagrams of a pixel clustering operation according to the second exemplary embodiment of the disclosure.

Referring to FIG. 13A, in the present exemplary embodiment, in the operation of selecting two pixels from a plurality of the third pixels within the adjacent area 1000 of the first coding unit 200 to serve as the first index pixel and the second index pixel, the color selecting module 114 clusters the pixels into a plurality of clusters according to pixel values of the third pixels within the adjacent area 1000. For example, it is assumed that the size of the first coding unit 200 is 4×4, the adjacent area 1000 then includes 9 third pixels. The color selecting module 114 clusters the pixels with the same color into same clusters according to the pixel values of the pixels. For example, the two pixels belonging to a cluster 1102 have the same pixel value, and a color of the two pixels is C1, the five pixels belonging to a cluster 1104 have the same pixel value and a color of the five pixels is C2, and regarding one pixel belonging to the cluster 1106 and one pixel belong the cluster 1108, there is no other pixel with the same pixel value in the same cluster, and colors of the one pixel belonging to the cluster 1106 and the one pixel belonging to the cluster 1108 are respectively C4 and C5. Then, the color selecting module 114 selects a first cluster and a second cluster according to the number of the pixels corresponding to each of the clusters. Since the number of the pixels of the cluster 1104 and the number of the pixels of the cluster 1102 are all greater than the number of the pixels of the other clusters, the color selecting module 114 selects the cluster 1104 as the first cluster, and selects the cluster 1102 as the second cluster, and takes one pixel in the first cluster as the first index pixel, and takes one pixel in the second cluster as the second index pixel. It should be noticed that the method for clustering the pixels is not limited by the disclosure, for example, in another exemplary embodiment, the color selecting module 114 clusters the pixels with similar pixel values into a same cluster.

Referring to FIG. 13B, in the present exemplary embodiment, in the operation of selecting two pixels from a plurality of the third pixels within the adjacent area 1000 of the first coding unit 200 to serve as the first index pixel and the second index pixel, the color selecting module 114 clusters any two pixels with a difference between the pixel values thereof being smaller than a predetermined difference into a same cluster according to the pixel values of the third pixels in the adjacent area 1000, such that the pixels with similar color can be clustered to a same cluster. For example, a difference between the pixel values of any two pixels in the six pixels belonging to the cluster 1114 is smaller than the aforementioned predetermined difference, and such two pixels have the similar color C2; a difference between the pixel values of the two pixels belonging to the cluster 1116 is also smaller than the aforementioned predetermined difference, and such two pixels have a similar color C4; and regarding the pixel belonging to the cluster 1112, there is no other pixel with the similar pixel value in the same cluster, and the color of the one pixel belonging to the cluster 1112 is C1. Then, the color selecting module 114 selects the first cluster and the second cluster according to the number of the pixels corresponding to each of the clusters. Since the number of the pixels of the cluster 1114 and the number of the pixels of the cluster 1116 are all greater than the number of the pixels of the other clusters, the color selecting module 114 selects the cluster 1114 as the first cluster, and selects the cluster 1116 as the second cluster, and takes one pixel in the first cluster as the first index pixel, and takes one pixel in the second cluster as the second index pixel.

Then, the index setting module 116 sequentially sets the index value corresponding to the first index pixel to 0 and the index value corresponding to the second index pixel to 1. Moreover, in the operation that the coding module 112 transmits the coding value to the decoder 120, the coding module 112 also transmits the identification value corresponding to each pixel pair or the color of the first index pixel and the color of the second index pixel to the decoder 120. For example, in the exemplary embodiment of FIG. 13A, the first index pixel belongs to the cluster 1104, and the second index pixel belongs to the cluster 1102, so that the color of the first index pixel and the color of the second index pixel are respectively C2 and C1. In the exemplary embodiment of FIG. 13B, the first index pixel belongs to the cluster 1114 and the second index pixel belongs to the cluster 1116, so that the color of the first index pixel and the color of the second index pixel are respectively C2 and C4.

Thereafter, in the operation that the index map establishing module 118 uses the two-color mode to index each of the pixels in the first coding unit 200 to generate the index map, the operation that the coding module 112 generates the coding value corresponding to the first coding unit 200 according to the index map and the operation that the coding module 112 transmits the coding value 600 to the decoder 120 are all the same to the methods mentioned in the first exemplary embodiment, which are not repeated.

Moreover, after the coding value receiving module 122 of the decoder 120 receives the coding value corresponding to the first coding unit 200, the operation that the decoding module 124 reconstructs the index map corresponding to the first coding unit 200 according to the coding value is also the same to the operation shown in FIG. 10A-FIG. 10G in the first exemplary embodiment, which is not repeated. Therefore, the decoding module 124 can reconstruct the pixels of the first coding unit 200 according to the color of the first index pixel, the color of the second index pixel and the index values of the index map.

### [Third exemplary embodiment]

An encoding method and a decoding method and a codec system thereof of the third exemplary embodiment are substantially the same to the encoding methods and the decoding methods and the codec systems thereof of the first and the second exemplary embodiments, and differences therebetween are that in the third exemplary embodiment, the area from which two pixels are selected can be extended to other adjacent coding units, and in the third exemplary embodiment, the statistical and quantitative method is also used to select the two pixels to serve as the first index pixel and the second index pixel. The differences between the third exemplary embodiment and the first and second exemplary embodiments are described below with reference of the codec system of the first exemplary embodiment and the referential numbers of the components therein.

FIG. 14 is a schematic diagram of an image coding operation according to the third exemplary embodiment of the disclosure.

Referring to FIG. 14, the same to the first exemplary embodiment, the coding module 112 selects two pixels from a plurality of pixels within an adjacent area of the first coding unit 200 to serve as the first index pixel and the second index pixel. However, the disclosure is not limited thereto, for example, in another exemplary embodiment, the coding module 112 can also select two pixels from all of the pixels in the frame to serve as the first index pixel and the second index pixel. It is assumed that a size of the first coding unit 200 in a frame received by the coding module 112 is L×L, where L is a positive integer. Particularly, in the present exemplary embodiment, the adjacent area includes a plurality of pixels (which are referred to as third pixels) in at least one second coding unit 220 located adjacent to the first coding unit 200, where the third pixels are located adjacent to the first coding unit 200. Here, the area in which the third pixels are located is the adjacent area 1000. Moreover, the adjacent area further includes an adjacent area 1200-1 where the adjacent area 1000 extends to a second coding unit 1202 in at least one second coding unit 1220 and an adjacent area 1200-2 where the adjacent area 1000 extends to a second coding unit 1204 in the at least one second coding unit 1220. Namely, the coding module 112 selects two pixels from a plurality of pixels in the adjacent area 1000, the adjacent area 1200-1 and the adjacent area 1200-2 to serve as the first index pixel and the second index pixel.

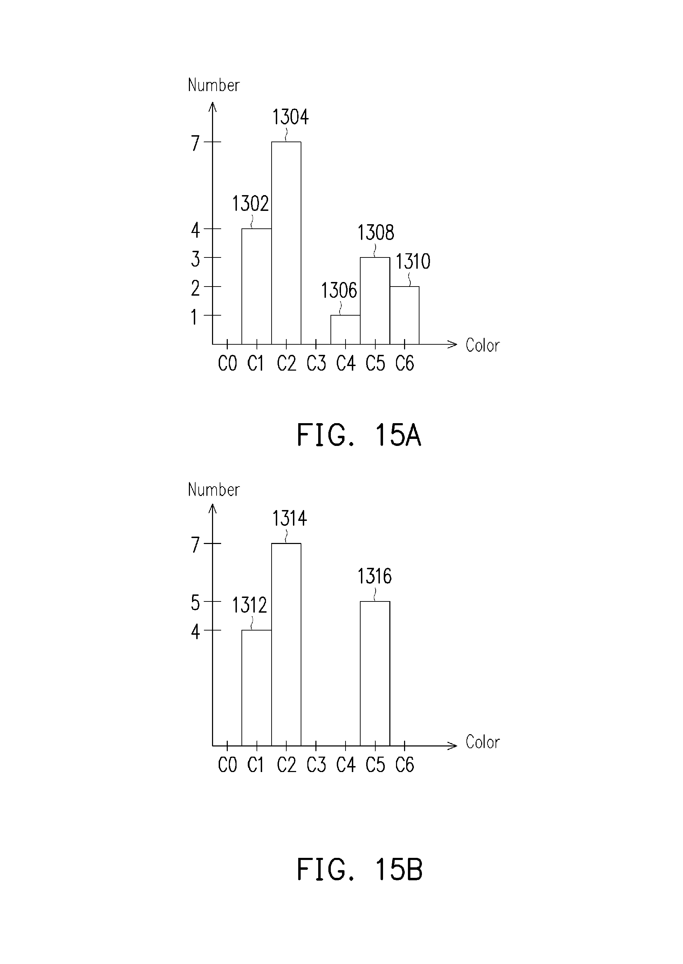

FIG. 15A and FIG. 15B are schematic diagrams of a pixel clustering operation according to the third exemplary embodiment of the disclosure.

Referring to FIG. 15A, in the present exemplary embodiment, in the operation of selecting two pixels from a plurality of the pixels within the adjacent area 1000, the adjacent area 1200-1 and the adjacent area 1200-2 of the first coding unit 200 to serve as the first index pixel and the second index pixel, the color selecting module 114 clusters the pixels into a plurality of clusters according to pixel values of the pixels within the adjacent area 1000, the adjacent area 1200-1 and the adjacent area 1200-2. For example, it is assumed that the size of the first coding unit 200 is 4×4, the adjacent area 1000 then includes 17 pixels. The color selecting module 114 clusters the pixels with the same color into same clusters according to the pixel values of the pixels. For example, the four pixels belonging to a cluster 1302 have the same pixel value, and a color of the four pixels is C1; the seven pixels belonging to a cluster 1304 have the same pixel value and a color of the seven pixels is C2; and regarding one pixel belonging to the cluster 1306, there is no other pixel with the same pixel value in the same cluster, and a color of the one pixel belonging to the cluster 1306 is C4; the three pixels belonging to a cluster 1308 have the same pixel value and a color of the three pixels is C5; the two pixels belonging to a cluster 1310 have the same pixel value and a color of the two pixels is C6. Then, the color selecting module 114 selects a first cluster and a second cluster according to the number of the pixels corresponding to each of the clusters. Since the number of the pixels of the cluster 1302 and the number of the pixels of the cluster 1304 are all greater than the number of the pixels of the other clusters, the color selecting module 114 selects the cluster 1302 as the first cluster, and selects the cluster 1304 as the second cluster, and takes one pixel in the first cluster as the first index pixel, and takes one pixel in the second cluster as the second index pixel. It should be noticed that the method for clustering the pixels is not limited by the disclosure, for example, in another exemplary embodiment, the color selecting module 114 clusters the pixels with similar pixel values into a same cluster.

Referring to FIG. 15B, in the present exemplary embodiment, in the operation of selecting two pixels from a plurality of the pixels within the adjacent area 1000, the adjacent area 1200-1 and the adjacent area 1200-2 of the first coding unit 200 to serve as the first index pixel and the second index pixel, the color selecting module 114 clusters any two pixels with a difference between the pixel values thereof being smaller than a predetermined difference into a same cluster according to the pixel values of the pixels in the adjacent area 1000, such that the pixels with similar color can be clustered to a same cluster. For example, a difference between the pixel values of any two pixels in the four pixels belonging to the cluster 1312 is smaller than the aforementioned predetermined difference, and such two pixels have the similar color C1; a difference between the pixel values of any two pixels in the seven pixels belonging to the cluster 1314 is smaller than the aforementioned predetermined difference, and such two pixels have a similar color C2; and a difference between the pixel values of any two pixels in the five pixels belonging to the cluster 1316 is smaller than the aforementioned predetermined difference, and such two pixels have a similar color C5. Then, the color selecting module 114 selects the first cluster and the second cluster according to the number of the pixels corresponding to each of the clusters. Since the number of the pixels of the cluster 1314 and the number of the pixels of the cluster 1316 are all greater than the number of the pixels of the other clusters, the color selecting module 114 selects the cluster 1314 as the first cluster, and selects the cluster 1316 as the second cluster, and takes one pixel in the first cluster as the first index pixel, and takes one pixel in the second cluster as the second index pixel.

Then, the index setting module 116 sequentially sets the index value corresponding to the first index pixel to 0 and the index value corresponding to the second index pixel to 1. Moreover, in the operation that the coding module 112 transmits the coding value to the decoder 120, the coding module 112 also transmits the identification value corresponding to each pixel pair or the color of the first index pixel and the color of the second index pixel to the decoder 120. For example, in the exemplary embodiment of FIG. 15A, the first index pixel belongs to the cluster 1304, and the second index pixel belongs to the cluster 1302, so that the color of the first index pixel and the color of the second index pixel are respectively C2 and C1. In FIG. 15B, the first index pixel belongs to the cluster 1314 and the second index pixel belongs to the cluster 1316, so that the color of the first index pixel and the color of the second index pixel are respectively C2 and C5.

Thereafter, in the operation that the index map establishing module 118 uses the two-color mode to index each of the pixels in the first coding unit 200 to generate the index map, the operation that the coding module 112 generates the coding value corresponding to the first coding unit 200 according to the index map and the operation that the coding module 112 transmits the coding value 600 to the decoder 120 are all the same to the methods mentioned in the first exemplary embodiment, which are not repeated.

Moreover, after the coding value receiving module 122 of the decoder 120 receives the coding value corresponding to the first coding unit 200, the operation that the decoding module 124 reconstructs the index map corresponding to the first coding unit 200 according to the coding value is also the same to the operation shown in FIG. 10A-FIG. 10G in the first exemplary embodiment, which is not repeated. Therefore, the decoding module 124 can reconstruct the pixels of the first coding unit 200 according to the color of the first index pixel, the color of the second index pixel and the index values of the index map.

In summary, in the encoding method, the decoding method and the codec system, the encoder and the decoder using the methods of the disclosure, only the index value corresponding to the 1^{st} scanned pixel in the pixels of the coding unit is recorded in the coding value, such that a data transmission amount during the coding computation is effectively decreased, so as to effectively enhance the coding/decoding performance.

## Claims

1. A decoding method, comprising:
receiving(S1001) a coding value(600) corresponding to a first coding unit(200), wherein the first coding unit(200) comprises a plurality of pixels arranged in an L×L array, and L is a positive integer;
reconstructing(S1003) an index map(900) corresponding to the first coding unit(200) according to an index value, at least one code mode and at least one value(618) corresponding to at least one running character in the coding value(600), wherein the index value in the received coding value(600) only comprises an index value of a 1^{st} scanned index in the index map(900) of the first coding unit(200);
obtaining a color of a first index pixel and a color of a second index pixel; and
reconstructing(S1005) the pixels of the first coding unit(200) according to the color of the first index pixel, the color of the second index pixel and a plurality of index values of the index map(900), wherein the color of the first index pixel is different to the color of the second index pixel.

2. The decoding method as claimed in claim 1, wherein index values corresponding to the pixels of the first coding unit(200) in the index map(900) are arranged in the L×L array, and a number of scanned indexes in the index map(900) is c, wherein c is a positive integer greater than 0 and smaller than or equal to (L×L), and the index value of the 1st pixel is a scanned 1st index in the index map(900),
wherein the step of reconstructing the index map(900) corresponding to the first coding unit(200) according to the index value and the value(618) corresponding to the running character in the coding value(600) comprises:
if the code mode of the cth index is a copy left mode(610, 620, 640, 660, 670), reconstructing the index map(900) according to the scanned 1st index in the index map(900) and the value(618) corresponding to the running character when the pixel corresponding to the scanned 1st index in the index map(900) is decoded,
converting the scanned cth index into coordinates (x,y) and converting a scanned (c-1)th index into coordinates (m,n) when the number of the scanned indexes in the index map(900) is smaller than or equal to L, wherein a value of the index corresponding to the coordinates (m,n) is P; and
reconstructing the index map(900) according to the scanned (c-1)th index in the index map(900) and the value(618) corresponding to the running character when the pixel corresponding to the scanned cth index in the index map(900) is decoded, wherein a value of the scanned cth index in the index map(900) is a remainder obtained by dividing (P+1) by 2.

3. The decoding method as claimed in claim 2, wherein the step of reconstructing the index map(900) corresponding to the first coding unit(200) according to the index value, the code mode and the value(618) corresponding to the running character in the coding value(600) further comprises:
determining whether the code mode corresponding to the (c-1)th index uses a copy above mode(630, 650) or the copy left mode(610, 620, 640, 660, 670) to decode the pixel corresponding to the scanned (c-1)th index in the index map(900) when the pixel corresponding to the scanned cth index in the index map(900) is decoded, wherein the number of the scanned indexes in the index map(900) is greater than L;
converting the scanned cth index in the index map(900) into coordinates (x,y), converting the scanned (c-1)th index into coordinates (m,n), and converting the scanned (c-L)th index in the index map(900) into coordinates (p,q), wherein a value of the index corresponding to the coordinates (p,q) is Q, and a value of the index corresponding to the coordinates (m,n) is R;
reconstructing the index map(900) according to the scanned (c-L)th index in the index map(900) and the value(618) corresponding to the running character when it is determined that the copy above mode(630, 650) is used to decode the pixel corresponding to the scanned (c-1)th index in the index map(900), wherein a value of the scanned cth index in the index map(900) is a remainder obtained by dividing (Q+1) by 2; and
reconstructing the index map(900) according to the scanned (c-1)th index in the index map(900) and the value(618) corresponding to the running character when it is determined that the copy left mode(610, 620, 640, 660, 670) is used to decode the pixel corresponding to the scanned (c-1)th index in the index map(900), wherein a value of the scanned cth index in the index map(900) is a remainder obtained by dividing (R+1) by 2.

4. The decoding method as claimed in claim 1, wherein index values corresponding to the pixels of the first coding unit(200) in the index map(900) are arranged in the L×L array, and a number of scanned indexes in the index map(900) is c, wherein c is a positive integer greater than 0 and smaller than or equal to (L×L),
wherein the step of reconstructing the index map(900) corresponding to the first coding unit(200) according to the index value, the code mode and the value(618) corresponding to the running character in the coding value(600) further comprises:
determining whether the code mode corresponding to the cth index uses a copy above mode(630, 650) or a copy left mode(610, 620, 640, 660, 670) to decode the pixel corresponding to the scanned cth index in the index map(900) when the pixel corresponding to the scanned cth index in the index map(900) is decoded, wherein the number of the scanned indexes in the index map(900) is greater than L; and
converting the scanned cth index in the index map(900) into coordinates (x,y), converting the scanned (c-L)th index in the index map(900) into coordinates (p,q), and reconstructing the index map(900) according to the scanned (c-L)th index in the index map(900) and the value(618) corresponding to the running character when it is determined that the copy above mode(630, 650) is used to decode the pixel corresponding to the scanned cth index in the index map(900).

5. The decoding method as claimed in claim 1, wherein the step of obtaining the color of the first index pixel and the color of the second index pixel comprises:
receiving an identification value corresponding to the first index pixel and the second index pixel; and
identifying the color of the first index pixel and the color of the second index pixel from a pixel pair table(300) according to the identification value.

6. The decoding method as claimed in claim 1, wherein the step of obtaining the color of the first index pixel and the color of the second index pixel comprises:
receiving the color of the first index pixel and the color of the second index pixel.

7. An encoder(110), comprising:
a coding module(112), receiving a first coding unit(200) of a frame, wherein the first coding unit(200) comprises a plurality of pixels arranged in an L×L array, and L is a positive integer;
a color selecting module(114), selecting two pixels from the plurality of pixels in the frame to serve as a first index pixel and a second index pixel, wherein a color of the first index pixel is different to a color of the second index pixel; and
an index map establishing module(118), indexing each of the pixels in the first coding unit(200) to generate an index map(500), wherein a color of each pixel of the first coding unit(200) in the index map(500) is presented by an index value corresponding to the first index pixel or an index value corresponding to the second index pixel,
wherein only an index value corresponding to a 1st scanned pixel in the pixels of the first coding unit(200) in the index map(500) is recorded in a coding value(600).

8. The encoder(110) as claimed in claim 7, wherein the pixels of the frame comprises a plurality of third pixels in at least one second coding unit located adjacent to the first coding unit(200), wherein the third pixels are located adjacent to the first coding unit(200).

9. The encoder(110) as claimed in claim 8, wherein the third pixels are respectively two pixels(202, 204) located adjacent to an upper edge and a left edge of the pixel in a 1st column and a 1st row of the first coding unit(200), one pixel(206) located adjacent to an upper edge of the pixel in the 1st column and an Lth row of the first coding unit(200), one pixel(208) located adjacent to a left edge of the pixel in an Lth column and the 1st row of the first coding unit(200), and one pixel(210) located to an upper left corner of the pixel in the 1st column and the 1st row of the first coding unit(200).

10. The encoder(110) as claimed in claim 9, further comprising a pixel pair table(300) establishing module configured to establish a pixel pair table(300),
wherein the pixel pair table(300) establishing module generates a plurality of pixel pairs according to the third pixels, and records an identification value corresponding to each of the pixel pairs and colors of each pixel pair corresponding to the identification value in the pixel pair table(300),
wherein the color selecting module(114) selects one of the pixel pairs according to the pixel pair table(300), wherein two pixels of the selected pixel pair are set as the first index pixel and the second index pixel.

11. The encoder(110) as claimed in claim 10, wherein the coding module(112) is further configured to transmit the coding value(600) and the identification value to a decoder(120), wherein the coding value(600) comprises the index value of the 1st scanned pixel in the pixels of the first coding unit(200), at least one code mode and at least one value(618) corresponding to at least one running character.

12. The encoder(110) as claimed in claim 7, wherein the coding module(112) transmits the coding value(600), the color of the first index pixel and the color of the second index pixel to a decoder(120),
wherein the coding value(600) comprises the index value of the 1st scanned pixel in the pixels of the first coding unit(200), at least one code mode and at least one value(618) corresponding to at least one running character.

13. A decoder(120), comprising:
a coding value receiving module(122), receiving a coding value(600) corresponding to a first coding unit(200), wherein the first coding unit(200) comprises a plurality of pixels arranged in an L×L array, and L is a positive integer; and
a decoding module(124), reconstructing an index map(900) corresponding to the first coding unit(200) according to an index value, at least one code mode and at least one value(618) corresponding to at least one running character in the coding value(600), wherein the index value in the received coding value(600) only comprises an index value of a 1st scanned index in the index map(900) of the first coding unit(200),
wherein the decoding module(124) obtains a color of a first index pixel and a color of a second index pixel,
wherein the decoding module(124) reconstructs a plurality of pixels of the first coding unit(200) according to the color of the first index pixel, the color of the second index pixel and a plurality of index values of the index map(900), wherein the color of the first index pixel is different to the color of the second index pixel.

14. The decoder(120) as claimed in claim 13, wherein index values corresponding to the pixels of the first coding unit(200) in the index map(900) are arranged in the L×L array, and a number of scanned indexes in the index map(900) is c, wherein c is a positive integer greater than 0 and smaller than or equal to (L×L), and the index value of the 1st pixel is a scanned 1st index in the index map(900), wherein if the code mode of the cth index is a copy left mode(610, 620, 640, 660, 670), the decoding module(124) reconstructs the index map(900) according to the scanned 1st index in the index map(900) and the value(618) corresponding to the running character when decoding the pixel corresponding to the scanned 1 st index in the index map(900),
wherein when the number of the scanned indexes in the index map(900) is smaller than or equal to L, the decoding module(124) converts the scanned cth index in the index map(900) into coordinates (x,y) and converts a scanned (c-1)th index into coordinates (m,n), wherein a value of the index corresponding to the coordinates (m,n) is P,
wherein the decoding module(124) reconstructs the index map(900) according to the scanned (c-1)th index in the index map(900) and the value(618) corresponding to the running character when decoding the pixel corresponding to the scanned cth index in the index map(900), wherein a value of the scanned cth index in the index map(900) is a remainder obtained by dividing (P+1) by 2.

15. The decoder(120) as claimed in claim 14, wherein the decoding module(124) further determines whether the code mode corresponding to the (c-1)th index uses a copy above mode(630, 650) or the copy left mode(610, 620, 640, 660, 670) to decode the pixel corresponding to the scanned (c-1)th index in the index map(900) when decoding the pixel corresponding to the scanned cth index in the index map(900), wherein the number of the scanned indexes in the index map(900) is greater than L,
wherein the decoding module(124) converts the scanned cth index in the index map(900) into coordinates (x,y), converts the scanned (c-1)th index into coordinates (m,n), and converts the scanned (c-L)th index in the index map(900) into coordinates (p,q), wherein a value of the index corresponding to the coordinates (p,q) is Q, and a value of the index corresponding to the coordinates (m,n) is R,
wherein the decoding module(124) reconstructs the index map(900) according to the scanned (c-L)th index in the index map(900) and the value(618) corresponding to the running character when determining that the copy above mode(630, 650) is used to decode the pixel corresponding to the scanned (c-1)th index in the index map(900), wherein a value of the scanned cth index in the index map(900) is a remainder obtained by dividing (Q+1) by 2; and
wherein the decoding module(124) reconstructs the index map(900) according to the scanned (c-1)th index in the index map(900) and the value(618) corresponding to the running character when determining that the copy left mode(610, 620, 640, 660, 670) is used to decode the pixel corresponding to the scanned (c-1)th index in the index map(900), wherein a value of the scanned cth index in the index map(900) is a remainder obtained by dividing (R+1) by 2.

16. The decoder(120) as claimed in claim 13, wherein index values corresponding to the pixels of the first coding unit(200) in the index map(900) are arranged in the L×L array, and a number of scanned indexes in the index map(900) is c, wherein c is a positive integer greater than 0 and smaller than or equal to (L×L),
wherein the decoding module(124) determines whether the code mode corresponding to the cth index uses a copy above mode(630, 650) or a copy left mode(610, 620, 640, 660, 670) to decode the pixel corresponding to the scanned cth index in the index map(900) when decoding the pixel corresponding to the scanned cth index in the index map(900), wherein the number of the scanned indexes in the index map(900) is greater than L,
wherein the decoding module(124) converts the scanned cth index in the index map(900) into coordinates (x,y), converts the scanned (c-L)th index in the index map(900) into coordinates (p,q), and reconstructs the index map(900) according to the scanned (c-L)th index in the index map(900) and the value(618) corresponding to the running character when determining that the copy above mode(630, 650) is used to decode the pixel corresponding to the scanned cth index in the index map(900).

17. The decoder(120) as claimed in claim 13, wherein the coding value receiving module(122) further receives an identification value corresponding to the first index pixel and the second index pixel,
wherein the decoding module(124) identifies the color of the first index pixel and the color of the second index pixel from a pixel pair table(300) according to the identification value.

18. The decoder(120) as claimed in claim 13, wherein the coding value receiving module(122) further receives the color of the first index pixel and the color of the second index pixel.
